(19) Europäisches Patentamt
European Patent Office
Office européen des brevets

(11) **EP 4 063 789 A1**

(12) **DEMANDE DE BREVET EUROPEEN**

(43) Date de publication:
**28.09.2022  Bulletin 2022/39**

(21) Numéro de dépôt: **21165406.6**

(22) Date de dépôt: **26.03.2021**

(51) Classification Internationale des Brevets (IPC):
**G01C 21/20** (2006.01)     **G01C 21/34** (2006.01)
**G08B 7/06** (2006.01)

(52) Classification Coopérative des Brevets (CPC):
**G01C 21/206; G01C 21/3407**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeurs:
• **Universite Gustave Eiffel**
  **77420 Champs-sur-Marne (FR)**
• **Centre national de la recherche scientifique**
  **75016 Paris (FR)**

• **Ecole Nationale des Ponts et Chaussées**
  **77420 Champs-sur-Marne (FR)**
• **Université Paris-Est Créteil Val de Marne**
  **94000 Créteil (FR)**

(72) Inventeurs:
• **RACHEDI, Abderrezak**
  **77100 MEAUX (FR)**
• **MEBARKI, Ahmed**
  **77420 CHAMPS SUR MARNE (FR)**

(74) Mandataire: **A.P.I. Conseil**
**Immeuble Newton**
**4, rue Jules Ferry**
**64000 Pau (FR)**

(54) **PROCÉDÉ ET DISPOSITIF DE GUIDAGE PAR OBJET CONNECTÉ DANS UN BÂTIMENT PAR LOCALISATION À CHAQUE BORNE DE POSITIONNEMENT**

(57)     La présente invention concerne un procédé de localisation et de guidage actualisé des déplacements des utilisateurs dans un bâtiment qui présente au moins des espaces fermés, délimités par des obstacles aux déplacements des utilisateurs, ledit guidage actualisé étant réalisé en fonction d'un événement dans le bâtiment, suivant des chemins menant vers un ou plusieurs lieux ci-bles donnés, ledit guidage étant adapté à chaque utilisateur, avec des objets connectés en liaison de communication sans fil avec un serveur des ressources à distance qui est un serveur de contrôle accessible par un réseau de communication. L'invention concerne également le dispositif associé.

FIG. 1

**Description**

**DOMAINE DE L'INVENTION**

La présente invention concerne un procédé de localisation d'utilisateurs, et de guidage, en fonction d'un évènement, dans un bâtiment, des déplacements des utilisateurs suivant des chemins menant vers un ou plusieurs lieux cibles donnés, le guidage étant adapté à chaque utilisateur.

**ETAT DE LA TECHNIQUE**

Face aux risques naturels et technologiques, la sécurité des personnes constitue un important enjeu : à titre d'exemple, cas des incendies pour le cas des IGH (immeubles de grande hauteur ; par exemple, 2635 décès causés par les incendies aux USA en 2015) et des transports souterrains (métro).

Les modèles d'évacuation des foules sont largement abordés par la recherche.

Les simulations sont cependant orientées vers la partie pré-désastre pour dimensionner les chemins et les issues de sortie (emplacements, largeurs, etc..): cas du stade olympique de Pékin qui devait être évacué en 8 min en cas d'alerte.

Malgré la diversité des systèmes d'alerte actuels (systèmes sonores, systèmes d'affichage...), ces solutions ne sont pas toujours en mesure de fournir des instructions d'évacuation simples et efficaces (alerte en temps réel, itinéraire d'évacuation, mise à jour de l'itinéraire selon évènements en temps réel, etc.).

Les principales raisons de ces limites sont :

- un manque de flexibilité : les notifications d'évacuation suivent généralement des plans d'évacuation prédéfinis, peu importe le type et le degré de menace ou danger. Cela peut conduire les gens dans des impasses (plafonds effondrés, escaliers détruits, sorties bloquées, etc.) ou engendrer des problèmes plus graves (conduire à des espaces avec des fuites de gaz et des explosions possibles).
- un manque de « discernement » et une panique : en situation de danger, les personnes se précipitent vers les mêmes sorties, ce qui entraîne une congestion au niveau de ces dernières, et ainsi un retard considérable lors de l'évacuation outre les chocs et bousculades.
- des instructions et informations insuffisantes : pour les personnes qui ne sont pas familières avec le bâtiment, les instructions d'évacuation peuvent ne pas être utiles, voire inutiles.

Certaines catastrophes graves (panne de courant, incendie, etc.) qui réduisent la visibilité peuvent aggraver la situation.

Il s'agit alors de mettre en place une nouvelle stratégie de résolution de la problématique, en plaçant l'utilisateur comme point central, afin de lui offrir les informations nécessaires et pertinentes au moment opportun pour mieux réagir à l'incident.

**EXPOSE DE L'INVENTION**

L'invention utilise la tendance actuelle à l'usage des technologies de la communication, notamment l'Internet des objets, les images immersives et des maquettes digitales BIM qui ont suscité l'idée d'extraire les chemins possibles, pour l'évacuation dans le bâtiment notamment.

L'objectif de l'invention est double :

- Il s'agit d'abord de repérer ou de confirmer la position d'un objet, connecté ou non connecté, et le sens de son déplacement dans un espace physique, en contextes Indoor ou Outdoor, lesquelles informations sont transcrites, en temps réel, dans le jumeau numérique de l'espace physique.
- Il s'agit ensuite de guider et superviser les déplacements d'un usager ou de groupes d'usagers, voire d'automates dotés de capacités de reconnaissance et de repérage « visuels ».

La présente invention s'appuie, en outre, sur la détermination de zones/points d'intérêts situés aux points de bifurcations et/ou de croisement de flux d'usagers.

Il s'agit alors d'optimiser le déploiement de bornes/ancres/capteurs en vue d'assurer une continuité de « visibilité réelle ou virtuelle » afin de détecter et confirmer la présence de chaque usager, dans l'espace physique, et d'en traduire la position en temps réel dans l'espace virtuel (jumeau digital).

En ces zones/points d'intérêts, l'identification des positions réelles des usagers est confirmée et assistée par la combinaison d'images immersives (360) dans l'espace physique qui permettent, par référence au jumeau digital, d'indiquer à l'usager et au serveur l'emplacement courant de chaque usager entrant dans les « dites » zones et aux proximité des « dits » points d'intérêt. Il s'agit alors via les objets connectés, en possession de l'usager, de le guider vers ses destinations cibles.

Ainsi l'invention permet de lever de façon certaine des ambiguïtés de positionnement de l'utilisateur, notamment en indoor, par une détermination certaine, aux bornes de positionnement, de la présence de l'utilisateur devant la borne de positionnement, en utilisant les techniques de jumeau digital, image sphérique, QR codes et balises connectées ou non.

La présente invention concerne plus précisément un procédé de localisation d'utilisateurs et de guidage actualisé des déplacements des utilisateurs dans un bâtiment, qui présente au moins des espaces fermés, délimités par des obstacles aux déplacements des utilisateurs, ledit guidage actualisé étant réalisé en fonction d'un évènement dans le bâtiment, suivant des chemins menant vers un ou plusieurs lieux cibles donnés ("E", "S", "W"),

le guidage étant adapté à chaque utilisateur,

avec des objets connectés en liaison de communication sans fil avec un serveur des ressources à distance qui est un serveur de contrôle accessible par un réseau de communication.

Le procédé présente les étapes suivantes :

i- à partir d'une maquette numérique du bâtiment (BIM, CIM),

- des moyens de calcul reliés à un serveur de contrôle définissent et calculent, de manière automatique, des nœuds,
les nœuds se répartissant entre des nœuds dispatcheurs ; et des nœuds de passage, les nœuds de passage étant des points d'un chemin devant être emprunté par les utilisateurs pour se déplacer vers un ou divers lieux cibles donnés ("E", "S", "W"), les nœuds de passage étant chacun associés à un nœud dispatcheur ;

- les moyens de calcul calculent, de manière automatique, des arêtes,
chaque arête reliant deux nœuds successifs en traversant les espaces sans rencontrer les obstacles ;

- les moyens de calcul reliés au serveur de contrôle assignent, à chaque nœud de passage, une liste d'attente d'utilisateurs, actualisée, à partir des profils d'utilisateurs, chaque profil d'utilisateurs déterminant des nœuds et arêtes, spécifiques à chaque profil, par lesquels peuvent se déplacer les utilisateurs ;

- les moyens de calcul calculent automatiquement, en tenant compte des obstacles, un graphe orienté acyclique (DAG) de déplacement vers le ou les lieux cibles, constitué avec les nœuds et les arêtes,

ii- des capteurs communiquant avec le serveur de contrôle, et les moyens de calcul , détectent un évènement automatiquement, semi-automatiquement ou manuellement, et sa localisation réelle dans le bâtiment, qui est stockée sur le serveur de contrôle ;

iii- les moyens de calcul identifient avec des bornes de positionnement, la présence de chaque utilisateur situé dans le bâtiment, à une borne de positionnement,
l'identification de la présence de l'utilisateur étant réalisée par l'interaction entre les moyens de calcul et la borne de positionnement devant laquelle se situent l'utilisateur, et/ou les objets connectés,
sans mesurer la puissance du signal de réception des objets connectés,
les bornes de positionnement étant situées à des nœuds de passage avec un degré de connectivité supérieur ou égal à 3, et étant des bornes de localisation et /ou de guidage,
les bornes de positionnement ayant une position identifiée dans la maquette numérique du bâtiment (BIM, CIM) ;

iv- en fonction de l'événement, qui entraine l'inaccessibilité de certains nœuds du graphe orienté acyclique (DAG), les moyens de calcul calculent un graphe orienté acyclique dit 'actualisé' (DAG') de déplacement vers le ou les lieux cibles ("E", "S", "W");

v- les moyens de calcul transposent les positions des utilisateurs aux bornes de positionnement dans la maquette numérique et calculent le nœud dispatcheur associé à chaque utilisateur et situé le plus près de l'utilisateur ;

vi- à partir du graphe orienté acyclique actualisé (DAG') et du nœud dispatcheur associé à chaque utilisateur, les moyens de calcul calculent un sous-graphe associé (DODAG') par utilisateur qui correspond au chemin personnalisé à chaque utilisateur vers un lieu cible donné ("E", "S", "W"),
le sous-graphe associé (DODAG') par utilisateur étant calculé à l'aide :

- d'une « fonction objectif individuelle » pour chaque nœud dispatcheur , basée sur le profil de l'utilisateur, construite pour :

  • attribuer à chaque utilisateur, et actualiser tous les nœuds de passage associés au nœud dispatcheur, à proximité duquel se trouve l'utilisateur,
  • constituer et actualiser des listes d'attente de chaque nœud de passage associé au nœud dispatcheur, pour l'utilisateur,
  • constituer et actualiser des listes d'attente de chaque nœud de passage pour l'utilisateur dans l'ensemble du bâtiment,
  permettant d'obtenir un ou plusieurs sous-graphes associés (DODAG') par utilisateur,

- d'une «fonction objectif générale» construite à partir des «fonctions objectif individuelles» de tous les utilisateurs, qui présente en entrée les listes d'attente de l'ensemble de chaque nœud de passage de l'ensemble du bâtiment de tous les utilisateurs, et en sortie les sous-graphes (DODAG') associés de tous les utilisateurs, la « fonction objectif générale » délivrant à chaque utilisateur son sous-graphe (DODAG') calculé pour optimiser l'ensemble des « fonctions objectif individuelles » de tous les utilisateurs, par rapport à des paramètres d'entrée,

et les moyens de calcul réitèrent les étapes ii à vi, pour actualiser le guidage spatialement et temporellement, de chaque utilisateur,
à une fréquence temporelle donnée et adaptée à l'événement,

vii- les moyens de calcul guident à chaque borne de positionnement chaque utilisateur via un objet connecté porté par l'utilisateur ou des objets connectés ou la borne de positionnement du bâtiment, à suivre son sous-graphe (DODAG') associé, vers un lieu cible donné ("E", "S", "W").

« Identification de la présence de l'utilisateur » comprend la localisation de l'utilisateur à un endroit, ou la localisation et l'identification de l'utilisateur présent à cet endroit.

Par exemple, la «fonction objectif générale» permet d'optimiser les listes d'attente de l'ensemble des nœuds de passage , afin de limiter le temps ou la distance de parcours (qui sont dans ce cas les paramètres d'entrée) de l'ensemble des utilisateurs vers le ou les lieux cibles. A cet effet, pour assurer une évacuation totale en un temps optimal, un usager pourrait effectuer un long détour et être redirigé vers une porte plus lointaine que celle la plus proche qu'il aurait empruntée s'il avait été seul usager.

Ainsi, par exemple pour certaines applications, les paramètres d'entrée peuvent être considérés comme les paramètres d'écoulement des personnes dans le bâtiment

Dans un mode de réalisation, l'objet de la personne connecté et le serveur de contrôle permettent, devant chaque borne de positionnement, la localisation et /ou le guidage de l'utilisateur, et les bornes de positionnement échangent des patterns numérisés ou imprimés avec l'objet connecté de l'utilisateur.

Dans un autre mode de réalisation, des objets connectés, tels que des caméras connectées, sont configurés pour identifier des utilisateurs ou leur présence, à chaque borne de positionnement. L'invention permet de localiser des objets non connectés, ou des utilisateurs, par un déploiement optimal de caméras connectées (signaux optiques, lasers, thermiques...).

Dans un autre mode de réalisation, les bornes de positionnement sont des bornes connectées au serveur de contrôle. Elles peuvent alors, par exemple, communiquer à ce dernier la présence de l'utilisateur.

Dans un autre mode de réalisation, les bornes de positionnement peuvent ne pas être connectées au serveur de contrôle. Elles peuvent alors, par exemple, et échanger des patterns numérisés ou imprimés avec l'objet connecté T de la personne. L'invention permet de localiser des objets connectés (smartphones, tablettes, chariots...) dans un espace fermé ou ouvert par un déploiement optimal de balises non connectées de positionnement (patterns numérisés ou imprimés : QR-codes...).

La présente invention concerne aussi un dispositif de localisation d'utilisateurs et de guidage des déplacements des utilisateurs dans un bâtiment qui présente au moins des espaces fermés, délimités par des obstacles aux déplacements des utilisateurs, ledit guidage étant réalisé en fonction d'un évènement dans le bâtiment, suivant des chemins menant vers un ou plusieurs lieux cibles donnés ("E", "S", "W") le guidage étant adapté à chaque utilisateur, qui présente :

- un serveur des ressources à distance qui est un serveur de contrôle (S) accessible par un réseau de communication ;

- des capteurs communiquant avec le serveur de contrôle, et des moyens de calcul, détectent un évènement automatiquement, semi-automatiquement ou manuellement, et sa localisation réelle dans le bâtiment, qui est stockée sur le serveur de contrôle ;

- au moins une borne de positionnement servant à confirmer la présence de l'utilisateur qui est transcrite dans la maquette numérique (BIM, CIM) par le serveur de contrôle,

- des objets connectés en liaison de communication sans fil avec le serveur de contrôle,

- des moyens de calcul reliés au serveur de contrôle qui sont configurés pour :

   i- à partir d'une maquette numérique du bâtiment (BIM, CIM),

- calculer des nœuds se répartissant entre : des nœuds dispatcheurs, et des nœuds de passage, les nœuds de passage étant des points du chemin devant être empruntés par les utilisateurs pour se déplacer vers le ou les divers lieux cibles donnés ("E", "S", "W") en évitant les obstacles ;

- calculer des arêtes, chaque arête reliant deux nœuds successifs en traversant les espaces sans rencontrer les obstacles

- assigner, à chaque nœud de passage, une liste d'attente d'utilisateurs, à partir de profils d'utilisateurs, chaque profil d'utilisateurs déterminant des nœuds et arêtes par lesquels peuvent se déplacer les utilisateurs ;

- calculer automatiquement un graphe orienté acyclique (DAG) de déplacement vers les lieux cibles, constitué avec les nœuds et les arêtes, et spécifique à chaque profil d'utilisateur,

   ii+iii- les moyens de calcul identifient avec les bornes de positionnement, la présence de chaque utilisateur situé dans le bâtiment, devant la borne de positionnement,

   l'identification de la présence de l'utilisateur étant réalisée par l'interaction entre les moyens de calcul et la borne de positionnement devant laquelle se situe l'utilisateur, et/ou les objets connectés,
   sans mesurer la puissance du signal de réception des objets connectés les bornes de positionnement étant situées à des nœuds de passage avec un degré de connectivité supérieur ou égal à 3 , et étant des bornes de localisation et /ou de guidage,

   la ou les bornes de positionnement ayant une position identifiée dans la maquette numérique du bâtiment (BIM, CIM) ;

   iv- calculer le graphe orienté acyclique dit 'actualisé' (DAG') de déplacement vers les lieux cibles en fonction de l'événement qui entraine l'inaccessibilité de certains nœuds du graphe orienté acyclique (DAG) ;

   v- transposer les positions des utilisateurs dans la maquette numérique et calculent le nœud dispatcheur associé à chaque utilisateur et situé le plus près de l'utilisateur;

   vi- calculer, pour chaque utilisateur, un sous-graphe associé (DODAG') qui correspond à un chemin personnalisé, à chaque utilisateur, vers un lieu cible donné ("E", "S", "W") via les bornes de positionnement, à partir du graphe orienté acyclique actualisé, et du nœud dispatcheur associé à chaque utilisateur,

   le sous-graphe (DODAG') qui correspond au chemin personnalisé à chaque utilisateur vers un lieu cible donné ("E", "S", "W") via les bornes de positionnement, étant calculé à l'aide :

- d'une «fonction objectif individuelle» pour chaque nœud dispatcheur, basée sur le profil de l'utilisateur, construite pour :

   • attribuer à chaque utilisateur, et actualiser tous ses nœuds de passage associés au nœud dispatcheur, à proximité duquel se trouve chaque utilisateur,
   • constituer et actualiser pour l'utilisateur des listes d'attente de chaque nœud de passage associé au nœud dispatcheur,
   • constituer et actualiser des listes d'attente de chaque nœud de passage pour l'utilisateur dans l'ensemble du bâtiment,

- d'une «fonction objectif générale» construite à partir des «fonctions objectif individuelles» de tous les utilisateurs, qui présente en entrée les listes d'attente des utilisateurs de chaque nœud de passage pour l'ensemble du bâtiment, et en sortie les sous-graphes (DODAG') de tous les utilisateurs,
la «fonction objectif générale» délivrant, à chaque utilisateur, son sous-graphe (DODAG') calculé pour optimiser l'ensemble des « fonctions objectif individuelles », de tous les utilisateurs ;

vii- les moyens de calcul réitèrent les étapes suivantes ii à vi, afin d'actualiser spatialement et temporellement le guidage, à une fréquence temporelle donnée et adaptée à l'événement,

- les objets connectés des utilisateurs ou des objets connectés ou la borne de positionnement localisés dans le bâtiment, guident à chaque borne de positionnement chaque utilisateur, à suivre son sous-graphe (DODAG') associé, vers un lieu cible donné ("E", "S", "W").

## DESCRIPTION DES FIGURES

D'autres objectifs, caractéristiques et avantages sortiront de la description détaillée qui suit en référence aux dessins donnés à titre illustratif et non limitatif parmi lesquels :

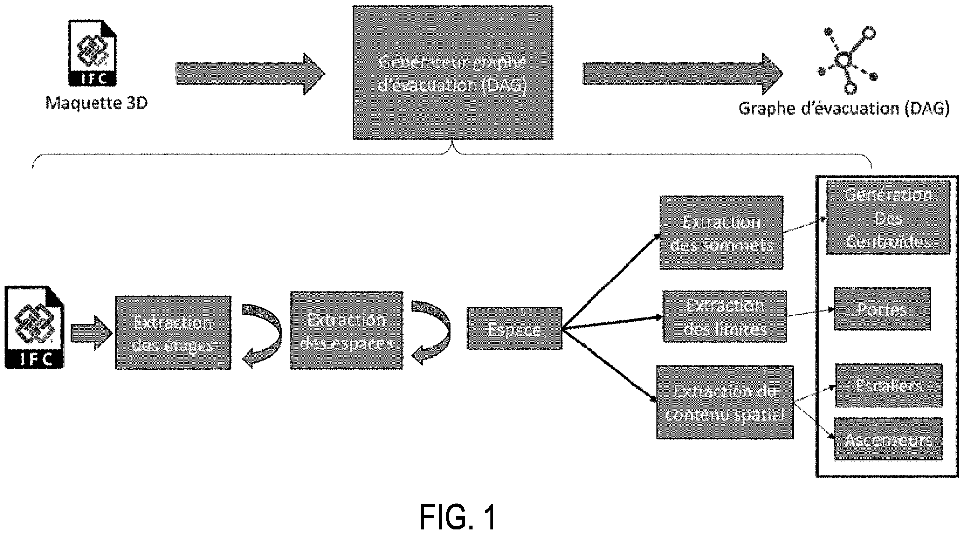

- la figure 1 représente un processus de calcul du DAG à partir d'une maquette numérique BIM (par exemple avec les fichiers IFC en anglais « Industry Foundation Classe ») ;

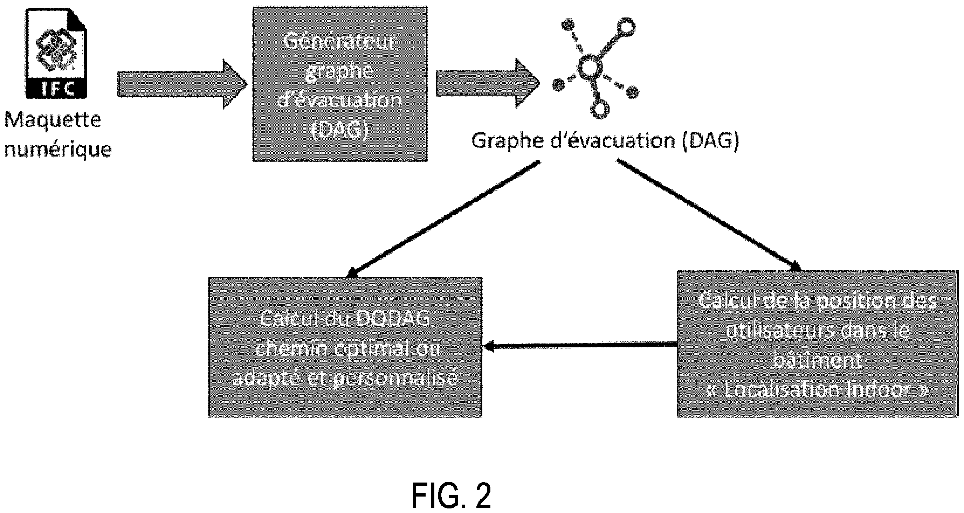

- la figure 2 représente l'interaction entre le processus de calcul du DAG et les processus de localisation et du calcul du DODAG' ;

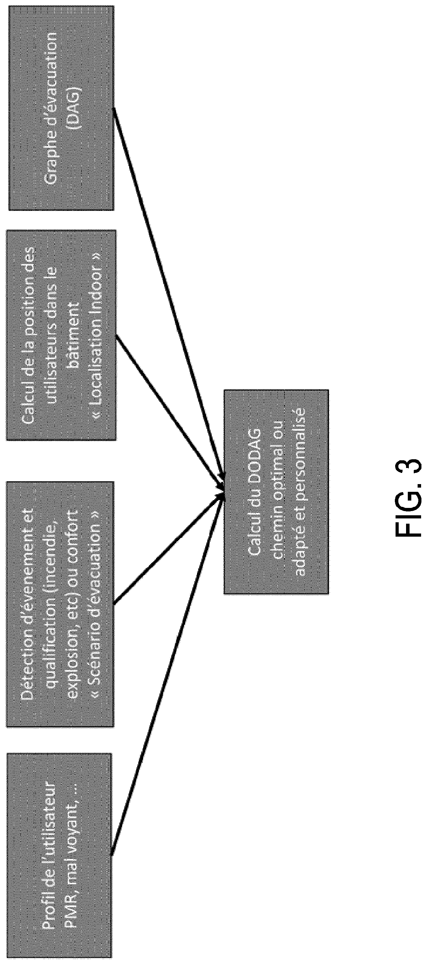

- la figure 3 représente le processus de calcul du DODAG' (à vide), chemin optimal ou adapté et personnalisé ;

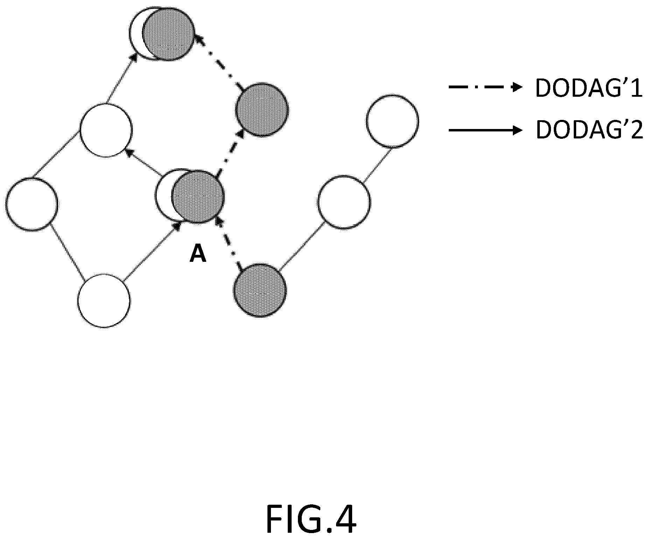

- la figure 4 représente le calcul du DODAG' chemin optimal ou adapté et personnalisé ; En pointillé le DODAG' extrait d'une fonction objectif 1 (DODAG'1) et en trait plein le DODAG' extrait d'une fonction objectif 2 (DODAG'2). Les nœuds sont représentés par les disques gris ou blanc, le nœud A étant un exemple de nœud appartenant au DODAG'1 et au DODAG'2 ;

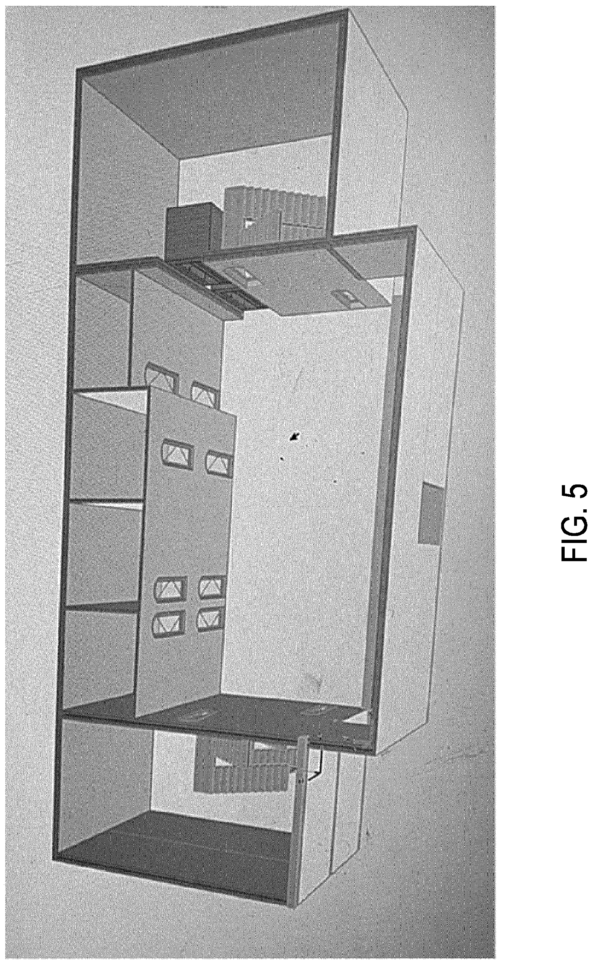

- la figure 5 représente une vue en coupe d'une bâtiment dans un exemple de réalisation de l'invention;

- les figures 6a, 6b, 6c, 6d représentent le déplacement des individus sur les deux étages ;

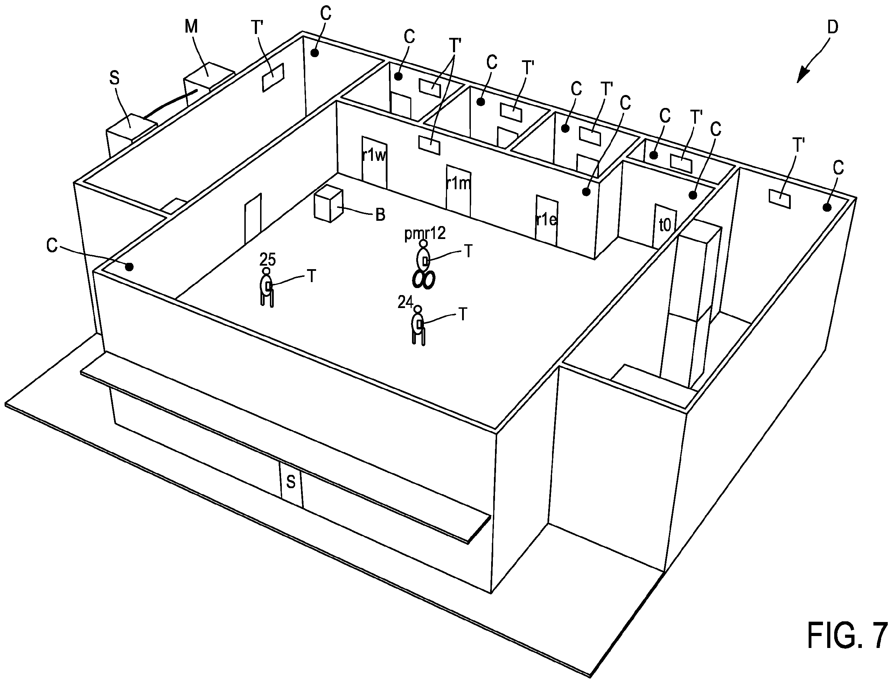

- la figure 7 représente une perspective du bâtiment : vue depuis le côté Sud ;

- la figure 8 représente une vue de l'étage "R1" : observateur situé côté Sud ;

- la figure 9 représente une vue de l'étage "Rdc" : observateur situé côté Sud ;

- la figure 10 représente un niveau "Rdc" : hall et portes de sortie : observateur à l'Est ;

- la figure 11 représente une vue des portes d'accès de l'étage "R1" au rez-de-chaussée "Rdc" ;

- la figure 12 représente un niveau "R1 : salles, hall, escaliers, ascenseur et corridors ;

- la figure 13 représente un ascenseur et escalier "Est" : observateur situé côté "Nord-Est" ;

- la figure 14 représente un escalier "Ouest" : observateur situé côté "Nord-Ouest" ;

- la figure 15 représente un ascenseur : portes "L1 " et "L0" aux niveaux "R1" et "Rdc" ;

- la figure 16 représente des nœuds : cercles "virtuels" au sol ("R1" + escaliers + ascenseur);

- la figure 17 représente un ensemble des nœuds : "Rdc", "R1", escaliers et ascenseurs

(a) Nœuds dans salles, escaliers, hall, ascenseur et sorties (vue côté "Sud") ;

(b) Vue récapitulative de tous les nœuds du bâtiment (vue côté "Sud-Est") ;

- la figure 18 représente un ensemble des arêtes : "Rdc", "R1", escaliers et ascenseurs

    (a) Arêtes : segments dans salles, escaliers, halls et ascenseur (vue côté "Nord")
    (b) Vue globale des arêtes du bâtiment (vue côté "Sud-Ouest")
    (c) Vue globale des arêtes du bâtiment (vue côté "Est") ;

- la figure 19 représente un DAG : graphe d'évacuation vers les sorties (vue du côté Sud) ;

- la figure 20 représente des usagers au niveau "R1" du bâtiment (vue du côté Ouest) ;

- la figure 21 représente des usagers au niveau "Rdc" du bâtiment (vue du côté Nord-Ouest) ;

- la figure 22 représente une liste d'attente des portes de sortie : position selon la distance la plus courte à la porte : vue depuis côté "Sud" ;

- la figure 23 représente une liste d'attente des nœuds de passage (seuil de porte) des salles "r1w", "r1m", "r1e", "t1" : vue depuis côté "Nord" ;

- la figure 24 représente une liste d'attente aux nœuds de passage (seuil de porte) des salles "R1" : vue depuis côté "Nord" ;

- la figure 25 représente une salle comportant 02 issues dénommées "1" et "2", et contenant 11 personnes "P :1" à "P :11" ;

- la figure 26 représente des phases intermédiaires lors de l'évacuation ;

- la figure 27 représente les derniers usagers en évacuation ;

- la figure 28 représente une salle comportant 02 issues dénommées "1" et "2", et contenant 99 personnes "P :1" à "P :99" ;

- la figure 29 représente les positions des usagers après au premier pas de temps ;

- la figure 30 représente les positions des usagers après au second pas de temps ;

- la figure 31 représente les derniers usagers avant évacuation complète.

## DESCRIPTION DETAILLEE DE L'INVENTION

Le système est composé d'une architecture modulaire avec trois volets:

- Acquisition des données à base d'objets connectés (Bornes d'accès, Points de références, Capteurs).
- Application mobile/web qui permet à l'utilisateur/administrateur d'interagir avec le système (envoi d'informations et de notifications).
- Services pour le traitement des données collectées, et la synchronisation de la base de données.

L'invention se décline en cinq modules complémentaires :

• Module 1: Génération/Extraction du graphe de connectivité de toute position dans la maquette BIM (en anglais « Building Information Model ») (bâtiment, infrastructures, installations sportives, etc).

• Module 2: Calcul des sous-graphes (ensemble des chemins possibles vers les diverses portes de sorties, à partir d'une position quelconque), qui sont des parties du graphe général (Module 1).

• Module 3: Détermination/Localisation de chaque utilisateur connecté et situé dans l'ensemble à évacuer. Sa position (correspondance dans la maquette BIM) par référence à des ancres dans la maquette BIM et signaux radios (objet connecté vers ancres = bornes d'accès tells bornes Wifi).

- Module 4: Détermination des trajectoires optimales pour l'individu, selon son profil, les chemins potentiels et les positions de l'ensemble des personnes à évacuer.

- Module 5: Guidage via l'objet connecté par interfaces/signaux personnalisés (image sur écran, indication sonore, vibrations directionnelles sur bracelets ou cannes, guidage par agent ou signaux lumineux, drones ou essaims de drones)

En d'autres termes, le procédé selon l'invention présente les étapes suivantes.

Le procédé présente dans une première étape i, les sous-étapes suivantes réalisées à partir d'une maquette numérique du bâtiment (BIM, CIM) :

- des moyens de calcul M reliés au serveur de contrôle S définissent et calculent, de manière automatique, des nœuds, les nœuds se répartissant entre des nœuds dispatcheurs $N_D$ ; et des nœuds de passage N, les nœuds de passage N étant des points d'un chemin devant être emprunté par les utilisateurs pour se déplacer vers un ou divers lieux cibles donnés "E", "S", "W", les nœuds de passage N étant associés chacun à un nœud dispatcheur $N_D$;

- les moyens de calcul M définissent et calculent, de manière automatique, des arêtes A, chaque arête reliant deux nœuds N, $N_D$ successifs en traversant les espaces sans rencontrer les obstacles ; chaque arête A reliant deux nœuds successifs en traversant les espaces sans rencontrer les obstacles et sans perte de visibilité entre deux nœuds successifs ; il est possible de tenir compte de l'espace « architectural » délimité par les parois et murs de séparation, et aussi des espaces réellement « navigables » au sein des «espaces architecturaux », prenant en considération les réels obstacles et obstructions aux passages des utilisateurs, qui peuvent être des objets ou autres ; ainsi les obstacles comprennent des parois et murs mais aussi des objets ou autres obstructions aux passages des utilisateurs ; ainsi les espaces présentent des nœuds et arêtes qui sont délimités par des obstacles aux déplacements des utilisateurs ; que ces obstacles soient des murs et/ou des objets ou autres, et soient générés par l'événement ou pas ;

- les moyens de calcul M reliés au serveur de contrôle S assignent, à chaque nœud de passage, une liste d'attente d'utilisateurs, actualisée ; à partir des profils d'utilisateurs, chaque profil d'utilisateurs déterminant des nœuds et arêtes, spécifiques à chaque profil, par lesquels peuvent se déplacer les utilisateurs ; pour les catégories d'usagers pouvant emprunter ces passages (à titre d'exemple, un nœud de passage attenant à un escalier ou escalator ne peut contenir des usagers tels que les personnes à mobilité réduites (PMR) sans accompagnements ou équipements spécifiques, pour emprunter ces escaliers ou escalators ; accès et chemins dédiés aux personnels habilités tels agents d'évacuation et de sécurité, des surfaces et espaces de navigation spécifiques pour des « usagers mécanisés » tels robots et autres automates, etc) ;

- les moyens de calcul M calculent automatiquement, en tenant compte des obstacles, un graphe orienté acyclique (DAG) de déplacement vers le ou les lieux cibles, constitué avec les nœuds N, $N_D$ et les arêtes A,

Dans une étape ii, des capteurs C communiquant avec le serveur de contrôle S, et les moyens de calcul M, détectent un évènement automatiquement, semi-automatiquement ou manuellement, et sa localisation réelle, automatiquement, semi-automatiquement ou manuellement, dans le bâtiment, que l'on stocke sur le serveur de contrôle S ;

Dans une étape iii, les moyens de calcul M identifient avec des bornes de positionnement B, la présence de chaque utilisateur situé dans le bâtiment, devant ou à proximité (quelques mètres)de la borne de positionnement B,

l'identification de la présence de l'utilisateur étant réalisée par l'interaction entre les moyens de calcul et la borne de positionnement devant laquelle se situe l'utilisateur, et/ou les objets connectés T, T',
sans mesurer la puissance du signal de réception des objets connectés T, T', les bornes de positionnement B étant situées à des nœuds de passage avec un degré de connectivité supérieur ou égal à 3 , et étant des bornes de localisation et /ou de guidage,
les bornes de positionnement B ayant une position identifiée dans la maquette numérique du bâtiment (BIM, CIM) ;

Dans une étape iv, en fonction de l'évènement, qui entraine l'inaccessibilité de certains nœuds N, $N_D$ du graphe orienté acyclique (DAG), les moyens de calcul M calculent un graphe orienté acyclique dit 'actualisé' (DAG') de déplacement vers le ou les lieux cibles "E", "S", "W".

Dans une étape v, les moyens de calcul M transposent les positions des utilisateurs aux bornes de positionnement B dans la maquette numérique et calculent le nœud dispatcheur $N_D$ associé à chaque utilisateur et situé le plus près de l'utilisateur.

Dans une étape vi, à partir du graphe orienté acyclique actualisé (DAG') et du nœud dispatcheur $N_D$ associé à chaque utilisateur, les moyens de calcul M calculent un sous-graphe associé (DODAG') par utilisateur qui correspond au chemin personnalisé à chaque utilisateur vers un lieu cible donné "E", "S", "W".

Le sous-graphe associé (DODAG') par utilisateur est calculé à l'aide :

- d'une « fonction objectif individuelle » pour chaque nœud dispatcheur $N_D$, basée sur le profil de l'utilisateur, construite pour :

  • attribuer à chaque utilisateur, et actualiser tous ses nœuds de passage N associés au nœud dispatcheur $N_D$, à proximité duquel se trouve chaque utilisateur,
  • constituer et actualiser des listes d'attente de chaque nœud de passage N associé au nœud dispatcheur $N_D$) pour l'utilisateur,
  • constituer et actualiser des listes d'attente de chaque nœud de passage N pour l'utilisateur dans l'ensemble du bâtiment,
  permettant d'obtenir un ou plusieurs sous-graphes associés (DODAG') par utilisateur,

- d'une «fonction objectif générale» construite à partir des «fonctions objectif individuelles» de tous les utilisateurs, qui présente en entrée les listes d'attente de l'ensemble de chaque nœud de passage (N) pour l'ensemble du bâtiment et pour tous les utilisateurs, et en sortie les sous-graphes (DODAG') associés de tous les utilisateurs, la « fonction objectif générale » délivrant à chaque utilisateur son sous-graphe (DODAG') calculé pour optimiser l'ensemble des « fonctions objectif individuelles » de tous les utilisateurs, par rapport à des paramètres d'entrée,

Dans une étape vii, les moyens de calcul M guident à chaque borne de positionnement B du bâtiment, chaque utilisateur, via son objet connecté T ou des objets connectés T' ou la borne de positionnement B, à suivre son sous-graphe (DODAG') associé, vers un lieu cible donné "E", "S", "W" via les autres prochaines bornes de positionnement.

A noter que parfois, avantageusement, mais de façon non limitative, les objets connectés T' ou les bornes de positionnement sont connectés ou représentent le même élément.

Avantageusement, dans un mode de réalisation du procédé selon l'invention, les moyens de calcul M déterminent également la position de l'utilisateur dans le bâtiment par triangulation à partir de la mesure de la puissance des objets connectés (T, T'). De manière également avantageuse, dans ce mode de réalisation, la triangulation utilise une étape d'apprentissage, lors de laquelle est mesurée la puissance du signal de réception de l'objet connecté situé à des positions connues dans le bâtiment en fonction des bornes B de communication sans fil et lors de laquelle la relation puissance du signal de réception et position dans le bâtiment est déterminée, par exemple avec un algorithme KNN.

Les moyens de calcul (M) réitèrent les étapes précédentes ii à vi, pour actualiser le guidage spatialement et temporellement, de chaque utilisateur, de l'étape vii, à une fréquence temporelle donnée et adaptée à l'évènement, et qui est délivré à l'utilisateur à ou devant chaque borne de positionnement.

Ainsi, au cours du guidage, l'utilisateur peut être amené à avoir un lieu cible qui change en fonction de l'évènement, et du parcours des autres utilisateurs.

L'invention permet de localiser des objets connectés (smartphones, tablettes, chariots...) dans un espace fermé ou ouvert par un déploiement optimal de balises connectées de positionnement (signaux radios : Bluetooth, UWB, Wifi, ZigBee...).

Un espace fermé est un espace défini comme un espace dans lequel l'utilisateur ne peut se connecter via son objet connecté au serveur de contrôle S, uniquement par des bornes B d'accès de communication installées dans le bâtiment (connexion uniquement en local) et en liaison de communication avec le serveur de contrôle S, à l'inverse de l'espace ouvert dans lequel la connexion de l'objet connecté de l'utilisateur est possible soit par des bornes B d'accès de communication soit en cellulaire.

Dans la présente invention, il est considéré de manière bien précise les espaces réellement « navigables » (prenant en considération les réels obstacles et obstructions aux passages des usagers : cas du mobilier fixe ou lourd, gradins de stages, rangées de bancs et fauteuils de lieux de spectacles ou amphithéâtres, installations et équipements dans les usines et ateliers, stands dans salles et halls d'exposition, à titre d'illustration ; de même, les espaces navigables doivent exclure, de manière dynamique évoluant dans le temps, certains périmètres dans le cas d'alertes et de mesures de sécurité aux alentours de bagages suspects ou de sources et fuites de produits nocifs ou fumées dans le cas d'incendies, etc) ; en outre, les obstacles additionnels, qui peuvent survenir du fait d'un évènement quelconque (séismes, incendies, menaces physiques, fuites de produits, etc), sont automatiquement et dynamiquement, en temps réel, pris en compte pour l'actualisation des « espaces réellement navigables ».

Les nœuds dispatcheur $N_D$ sont des nœuds que peuvent emprunter les utilisateurs. Ils sont reliés aux nœuds de passage N (qui sont les nœuds par lesquels il faut forcément passer pour l'utilisateur pour sortir).

En d'autres termes, selon la pertinence ou les exigences de considérer les utilisateurs individuellement ou par groupes (ou foule entière), la «fonction objectif générale» délivre en sortie tous les sous-graphes (DODAG') des utilisateurs, calculés pour optimiser les paramètres d'entrée (par exemple réduire le temps et/ou distance de parcours de tous les utilisateurs), en tenant compte de chacun de leur profil et de leur localisation dans le bâtiment.

La fonction « objectif générale » permet donc d'effectuer pour chaque utilisateur, parmi tous les DODAG' possibles de chaque utilisateur et déterminés par la « fonction objectif individuel », de sélectionner les DODAG', pour chaque utilisateur du groupe d'utilisateurs, permettant l'optimisation des paramètres d'entrée.

En d'autres termes, la «fonction objectif générale» délivre des listes d'attente de l'ensemble des nœuds, variant dans le temps et qui sont temporellement optimisées (ici les plus petites possibles à chaque étape de déplacement de l'ensemble des utilisateurs entre deux nœuds voisins) en tenant compte de chaque profil et de leur localisation dans le bâtiment (pour n'autoriser que certains déplacements ou des distances de déplacements spécifiques pour des utilisateurs donnés). A titre d'exemple, pour assurer une évacuation totale en un temps optimal, un usager pourrait effectuer un long détour et être redirigé, du fait du temps d'attente global ou de conflit de trajectoires dans le cas de flux croisés de personnes, vers une porte plus lointaine que celle, la plus proche, qu'il aurait empruntée s'il avait été seul usager.

Avantageusement, l'optimisation de la « fonction objectif générale » est réalisée avec l'une des stratégies suivantes :

- linéaire (max) ;

- « MRHOF » (en anglais « Minimum Rank with Hysteresis Objective Function ») ; fonction objective du rang minimum avec Hystérésis.
Cette fonction est standardisée par l'IETF (acronyme anglais « Internet Engineering Task Force ») sous forme d'une RFC (acronyme anglais « Request For Comments ») numéro : 6719 ; une référence de publication est Omprakash Gnawali and Philip Levis. (2012).

- « ETX Objective Function » ; elle est utilisée dans le contexte de transmission réseau qui se base sur le nombre de paquets transmis et reçus (elle mesure la fiabilité d'un lien de communication). Dans notre cas, elle mesure la fiabilité d'un chemin en termes de flux (Omprakash Gnawali and Philip Levis, 2010).

- stratégie min max ; c'est la stratégie qui consiste à minimiser la perte maximum (c'est-à-dire dans le pire scénario). Cette stratégie est très connue dans les problèmes d'optimisation et de recherche opérationnelle ; une référence possible est C. Jorgensen and S. Powell (1987).

On peut aussi utiliser une logique floue pour optimiser la « fonction objectif générale ».
Avec une fonction objectif individualisée, au « niveau Nœud dispatcheur $N_D$ (vertex : $V_j$, j étant l'indice du nœud)»,

$$S_j = \sum_{i=0}^{k} \alpha_i \cdot \left(\frac{m_i}{\gamma_i}\right),$$

$$\alpha_i = \begin{cases} 0 & \text{if } m_i < m_i^{lo} \\ 1 & \text{if } m_i^{lo} \leq m_i \leq m_i^{hi} \\ +\infty & \text{if } m_i^{hi} < m_i \end{cases}$$

où $\alpha$= valeur d'appartenance et le vecteur poids relatifs pour normalisation $\Gamma = [\gamma_0, \gamma_1,...,\gamma_k]$, avec les intervalles de valeurs des paramètres :

- $m_i^{min}$ la plus petite valeur possible de $m_i$,
- $m_i^{lo}$ la limite inférieure pour commencer à considérer $m_i$,
- $m_i^{hi}$ la limite supérieure avant de considérer seulement $m_i$,
- $m_i^{max}$ la valeur maximale possible de $m_i$,

et l'optimum sous contraintes par la «fonction objectif générale» correspondant à toute l'arborescence

$$P_\zeta(V_j) = \min_{\zeta \in Z}(S_\zeta)$$

', à partir des fonctions sur chaque Nœud dispatcheur $N_D$ « vertex : Vj ».

Avantageusement, le profil des utilisateurs peut comporter les informations suivantes, en vue, par exemple, de calculer le DODAG' personnalisé :

- catégorie de mobilité : Personne à Mobilité Réduite, enfant ;
- âge de l'utilisateur;
- présence d'autres utilisateurs spécifiques (donnés ou faisant partie de sa famille ou d'un groupe) ;
- profils différenciés (par exemple non voyant ; non entendant ; claustrophobes etc...).

L'événement peut être :

- une urgence (par exemple liée à la sécurité des personnes, colis piégé, feu/incendie, explosion, écroulement d'une partie d'un ouvrage, obstacle, situation menaçante, zone d'exclusion, etc...), et le procédé permet d'évacuer les personnes vers les lieux cibles qui sont des sorties, par exemple des sorties du bâtiment ou

- dit normal (par exemple recherche de confort ou acheminement vers des points d'intérêt, par exemple des magasins, centres culturels, installations sportives, gares, aéroports..., fluidifier les files d'attente, guider les livreurs vers les points de livraison/clients, ou des emplacements cibles tels lieux de spectacle..) et le procédé permet d'acheminer les utilisateurs vers les lieux cibles.

Selon la nature des évènements et la possibilité de collecte via objets connectés ou par signalement des usagers, dans l'étape ii, le serveur de contrôle S par les moyens de calcul et les capteurs détermine la nature de l'événement et sa localisation réelle dans le bâtiment :

a) automatiquement par des algorithmes et/ou
b) manuellement par entrée d'informations des utilisateurs qui sont envoyées au serveur de contrôle S, afin de déterminer dans le graphe d'évacuation les nœuds les plus proches de l'évènement.

Il y a plusieurs techniques de détection des anomalies à partir par exemple de la vidéo surveillance.

Deux approches utilisées sont :

1) basées sur l'analyse des trajectoires,
2) basées sur analyse des Pixels.

On peut citer comme exemples de références :

- H. Wang et al. (2011), S. Cosar et al. (2016).

Pour les algorithmes de détection des incendies, on peut considérer les références suivantes :

1- A partir des images/vidéo : e.g. E. Cetin et al. (2013).

2- A partir des capteurs C renifleurs : e.g. J. Fonollosa et al. (2018).

Les capteurs C de détection de l'événement utilisables peuvent être de divers types: caméra, capteur renifleur, ou l'objet connecté lui-même.

Il s'agit donc de l'ensemble des capteurs C physiques (comme de détection des feux, des gaz toxiques, etc...), mais aussi des capteurs C virtuels qui sont des algorithmes de fusion et d'analyse de données (scalaires ou multimédia). Par exemple, détection de singularité à partir d'une analyse d'image ou de vidéo. Souvent on fait appel à des techniques d'apprentissage et d'Intelligence artificielle

Dans une réalisation, le bâtiment présente plusieurs étages, et dans l'étape vi on calcule, à partir de chaque nœud de passage, un sous-graphe DODAG' dans tous les étages connectés entre eux via les nœuds de passage inter-étages (escaliers, rampes, escalators, ascenseurs...) qui est extrait du graphe DAG global pour traiter toute position dans le bâtiment.

Selon le cas le plus avantageux ou le plus pertinent, les interfaces/signaux personnalisés de l'étape vii sont :

- des images sur écran,
- par réalité virtuelle et augmentée (RVA),
- indication sonore, vibrations directionnelles sur bracelets ou cannes, guidage par agent ou signaux lumineux, drones ou essaims de drones

Dans l'étape ii, les capteurs et les moyens de calcul (M) peuvent déterminer la nature de l'événement et sa localisation réelle dans le bâtiment :

a) automatiquement ou semi automatiquement par des algorithmes et/ou
b) manuellement par entrée d'informations des utilisateurs qui sont envoyées au serveur de contrôle (S), afin de déterminer, dans le graphe orienté acyclique (DAG), les nœuds (N) les plus proches de l'évènement.

Les bornes de positionnement peuvent être :

- situées à des zones ou des points d'intérêt telles que des intersections d'itinéraires, des changements directionnels de flux, des singularités visuelles (perte de visibilité dans un cheminement), des emplacements de ressources telles des extincteurs en cas d'incendies ; et
- sont extraites et calculées à partir des maquettes numériques ou d'un graphe de connectivité représentant les espaces fermés ou ouvert.

Selon le cas le plus avantageux ou le plus pertinent, on associe dans le réseau de communication aux bornes de positionnement :

- des images « immersives » (sphériques 360...) avec une information de navigation (direction, sens) adaptée à l'utilisateur, envoyées à l'objet connecté, ou
- des images remontées par l'objet connecté au serveur et dans lesquelles est ajoutée une information de navigation,

Les nœuds dispatcheurs $N_D$ peuvent être des points centroïdes dans un espace tel une salle, hall, couloir...
Les nœuds de passage peuvent être des portes, entrées et sorties d'ascenseur, points hauts et bas de rampes ou d'escaliers...
La distinction entre nœuds dispatcheurs $N_D$ et nœuds de passage permet de fluidifier les passages sur tous les nœuds de passage du bâtiment pour tous les utilisateurs.
Les objets connectés T peuvent être choisis parmi la liste suivante :

- Smartphone,
- Libre scannage (self-scanning) connecté,
- Canne connectée (avec dispositif de vibration),
- Fauteuil roulant connecté,
- Tablette,
- Ecran connecté,
- Lunette connectée (lunette de RV/RA),
- Bracelet connecté (avec dispositif de vibration, et écran),
- Capteur connecté lumineux,
- Dispositifs de communication pour les agents de sécurité/d'évacuation,
- Robot connecté (doté d'un écran pour le guidage visuel ou vocal),
- Drone connecté (doté d'un écran pour le guidage visuel ou vocal).

Les objets connectés T peuvent être reliés au serveur de contrôle S avec deux modes possibles différenciés : « mode individuel » ou « mode groupe ».
Les bornes B de communication sans fil peuvent être fixes et/ou mobiles (sur des drones, des utilisateurs avec des renifleurs ou des utilisateurs agents et assistants d'évacuation).
Les objets connectés T peuvent présenter une interface pour entrer manuellement l'événement et des informations par les utilisateurs, qui sont envoyés au serveur de contrôle S, afin de déterminer dans le graphe d'évacuation les nœuds le plus proche de l'évènement.
Les objets connectés T peuvent présenter des moyens pour notifier, aux utilisateurs, la mise à jour du chemin.

Les notifications sont des messages d'information envoyés par le serveur de contrôle S vers les objets connectés T pour les informer des mises à jour sur le trajet d'évacuation ou/et du délai estimé pour évacuer le bâtiment. L'affichage des notifications est soit textuel, ou graphique, avec les nouvelles indications sur le chemin actualisé.

Le bâtiment peut être de tout type, par exemple : une installation scolaire, un centre commercial, une infrastructure sportive, une salle de concert, une « fan zone ».

Les avantages de l'invention

A : L'invention permet de localiser des objets connectés (smartphones, tablettes, chariots...) dans un espace fermé ou ouvert par un déploiement optimal de balises connectées de positionnement (signaux radios : Bluetooth, UWB, Wifi, ZigBee...),

B : L'invention permet de localiser des objets connectés (smartphones, tablettes, chariots...) dans un espace fermé ou ouvert par un déploiement optimal de balises non connectées de positionnement (patterns numérisés ou imprimés : QR-codes...),

C : L'invention permet de localiser des objets non connectés, ou des usagers, par un déploiement optimal de caméras connectées (signaux optiques, lasers, thermiques...),

D : L'invention permet d'identifier et de définir l'ensemble des sous-espaces représentant un intérêt particulier ou une difficulté critique : intersections d'itinéraires, changements directionnels de flux, singularités visuelles (perte de visibilité dans un cheminement), emplacements de ressources telles des extincteurs en cas d'incendies. Ces sous-espaces sont dits zones et/ou points d'intérêt,

E : L'invention permet d'extraire, de manière automatique ou semi-automatique, des zones et des points d'intérêt pour une application donnée, à partir des maquettes numériques (BIM, IFC...) ou d'un graphe de connectivité représentant les espaces (fermés ou ouverts),

F : L'invention permet d'associer à ces zones et points d'intérêt des images « immersives » (sphériques 360...),

G : L'invention permet de transcrire les images immersives, en temps réel dans le jumeau numérique, en vue de guider l'usager (ou l'automate) sur son itinéraire ou d'en corriger la trajectoire vers son lieu de destination.

L'optimisation se base sur :

- Le degré de connectivité des nœuds, dans le graphe de navigation : connectivité supérieure à un seuil donné (3 pour tenir compte des bifurcations ; 2 en cas d'obligation de garantir la visibilité permanente).
- L'importance des nœuds (dans zones et aux points d'intérêt) au regard de l'application : disponibilité des dispositifs, moyens et ressources requis par l'application : extincteurs en cas d'incendie, à titre d'illustration, zone de regroupement ou de repli (cas des PMR ou groupes spécifiques).

L'association et la transcription des images immersives dans le jumeau numérique et le graphe de l'itinéraire se basent sur deux modes complémentaires que sont :

- les applications existantes de Réalité Augmentée et les capacités d'IA pour envoyer au serveur les vidéos et photos, en streaming, en vue de reconnaitre la position de prise de vues, à partir de la connaissance des lieux via la maquette digitale.
- Le parsing des photos sur le jumeau digital à partir de la position identifiée, via les balises connectées ou non connectées, pour assister la navigation.

**Exemple de Bâtiment choisi en guise d'illustration**

Le bâtiment choisi en guise d'illustration comporte :

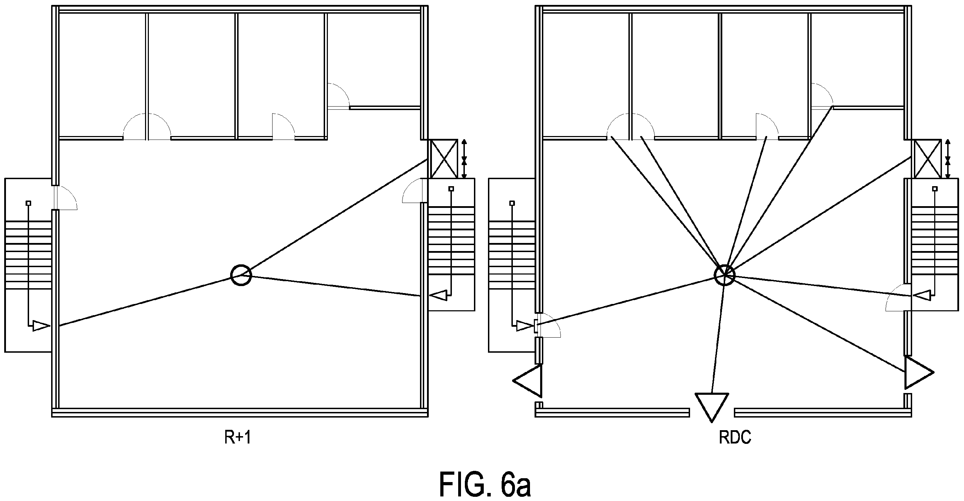

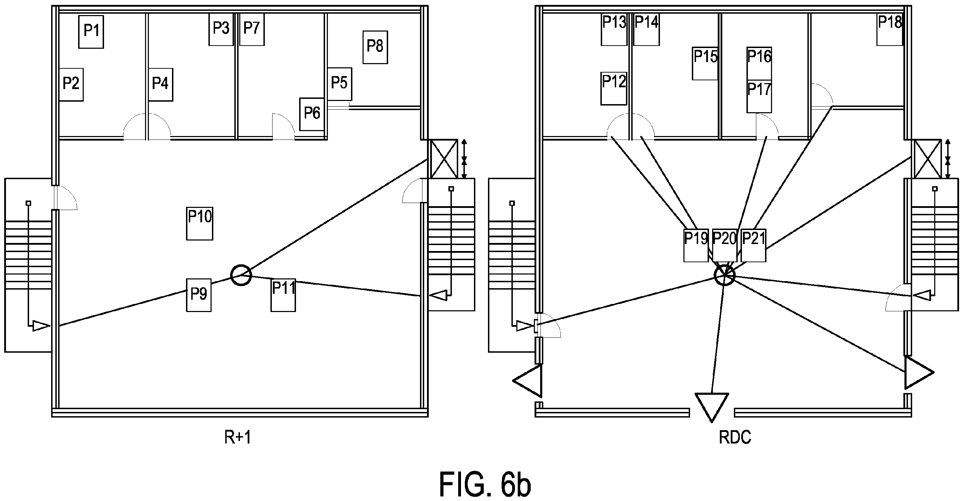

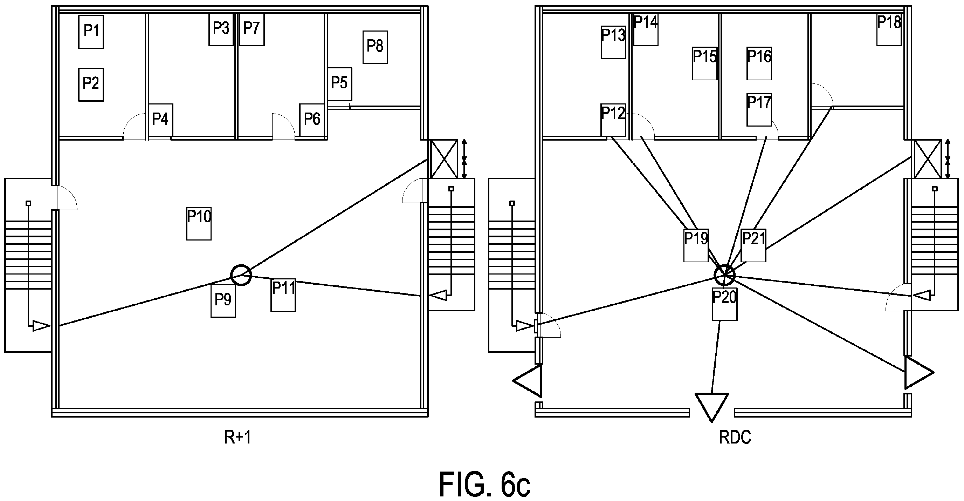

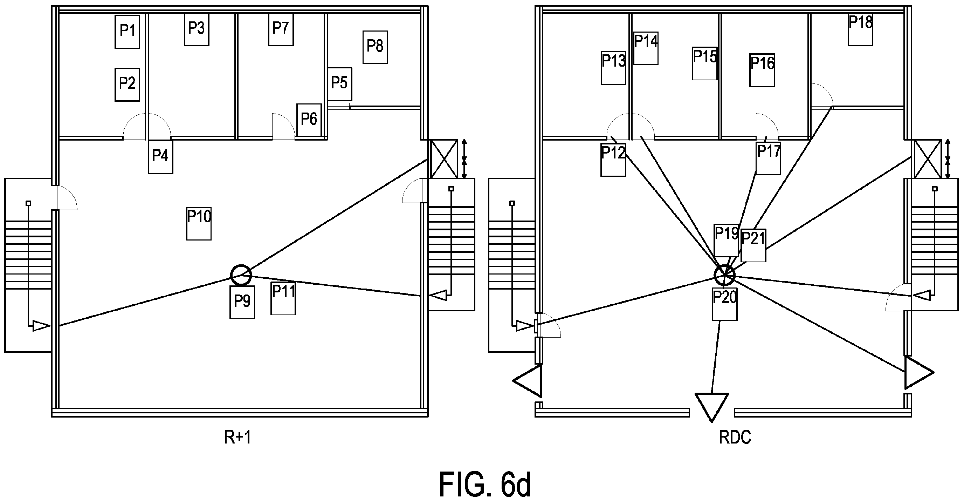

1. Deux étages, voir Fig. 6 :

(a) Rez de chaussée, dénommé "Rdc" ;
(b) Un étage supérieur, dénommé "R1"

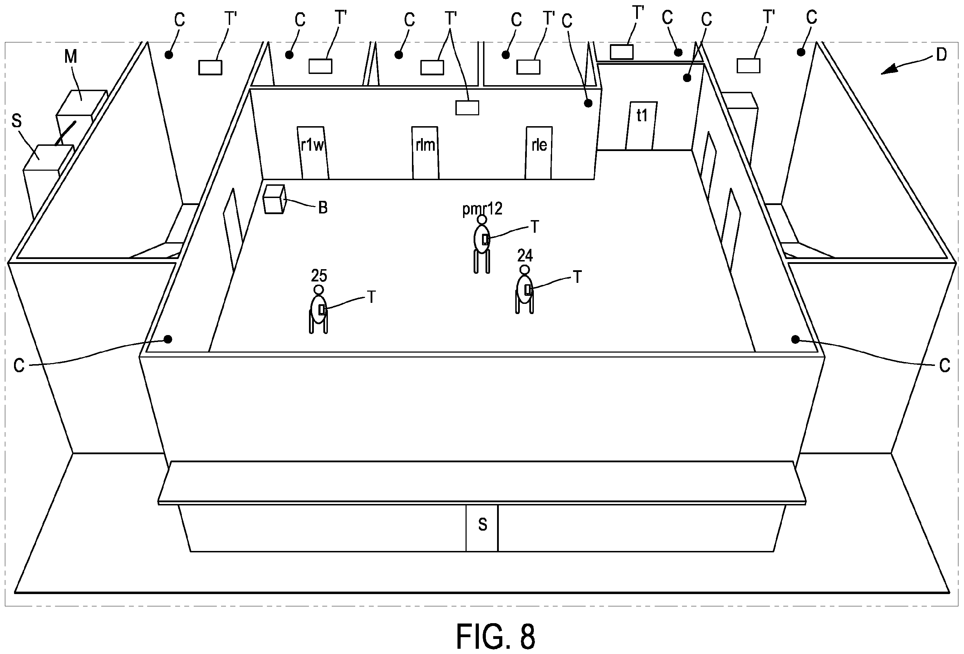

2. L'étage "R1" contient, voir Fig. 8 :

(a) 4 salles dénommées "r1w", "r1m", "r1e" (situées, respectivement, côté "Ouest", "Milieu", "Est") et "t1" qui sert de local technique.
Depuis chacune des 4 salles, une porte (sur laquelle est inscrit le nom de la salle) permet d'accéder au hall.

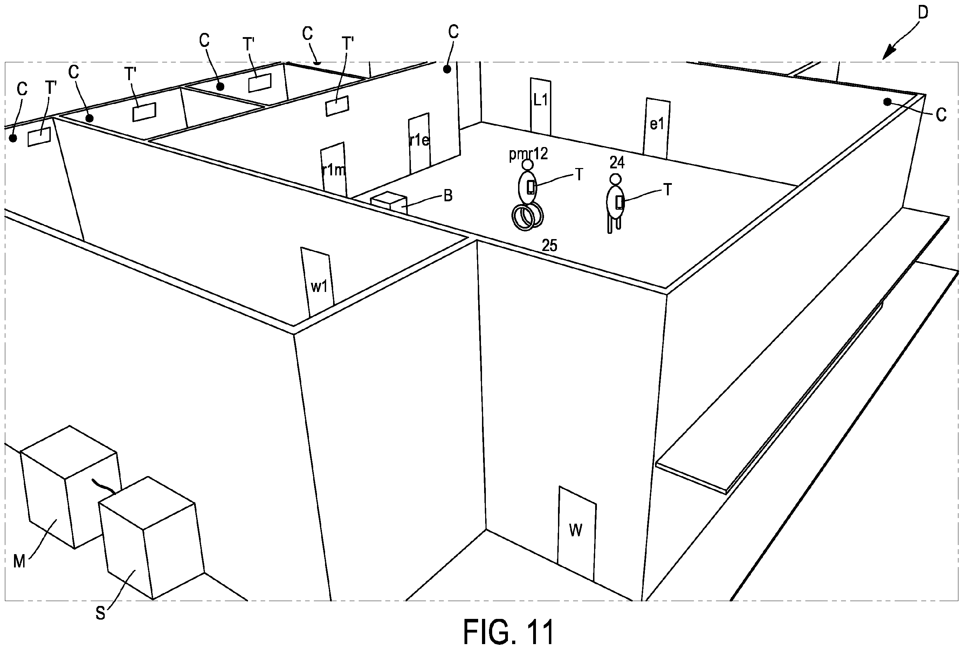

(b) Un hall qui permet ensuite d'accéder au niveau inférieur "Rdc" en passant par 3 chemins possibles en empruntant, voir Fig. 11 :

i. soit la porte d'accès "Est", dénommée "e1",
ii. soit la porte d'accès "Ouest", dénommée "w1",
iii. soit la porte de l'ascenseur, dénommée "L1".

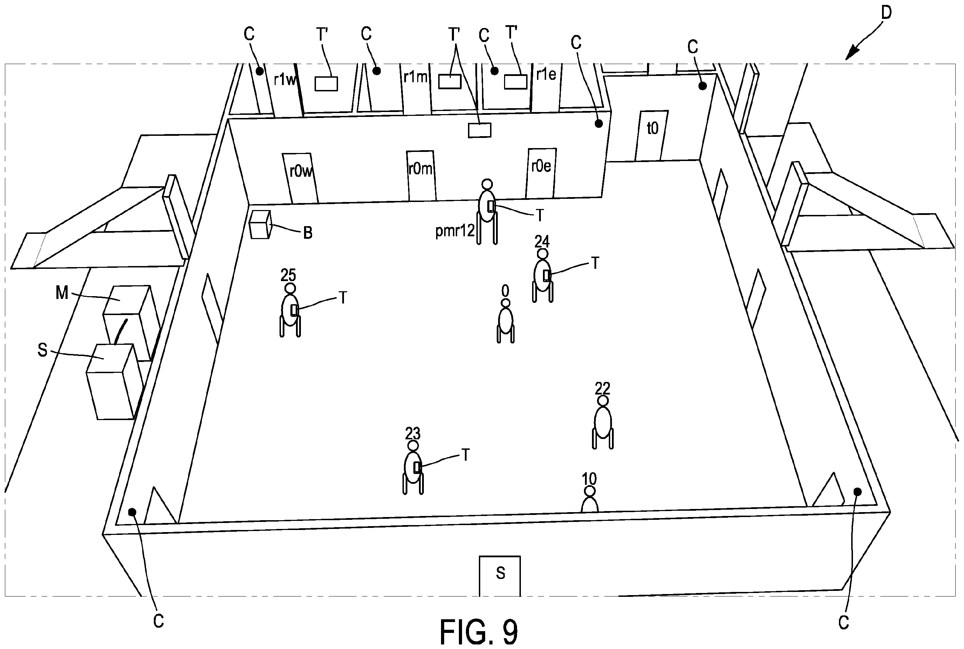

3. L'étage "Rdc" contient, voir Fig. 9 :

(a) 4 salles dénommées "r0w", "r0m", "r0e" (situées, respectivement, côté "Ouest", "Milieu", "Est") et "t0" qui sert de local technique.
Depuis chacune des 4 salles, une porte (sur laquelle est inscrit le nom de la salle) permet d'accéder au hall.

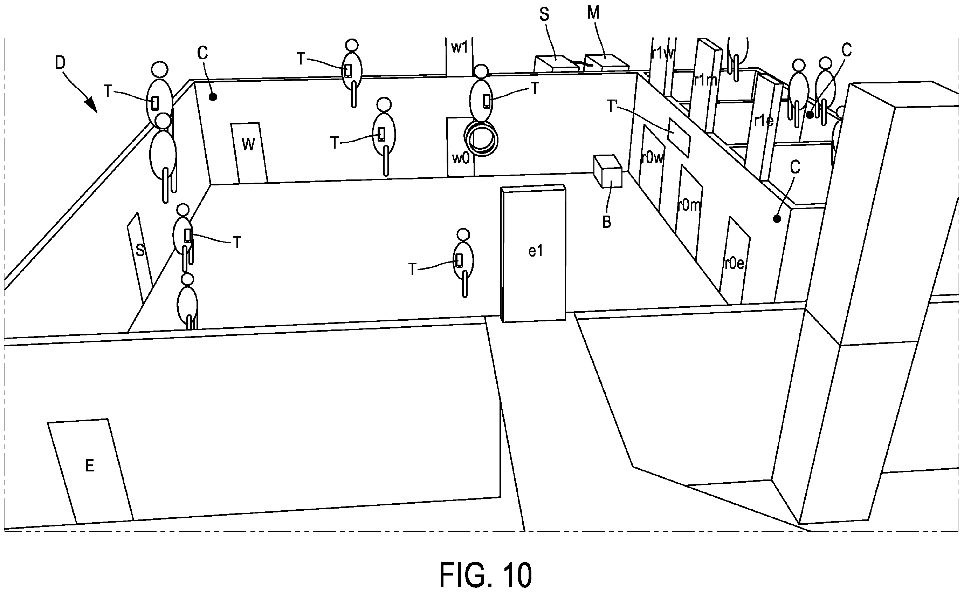

(b) Un hall qui permet ensuite d'accéder à l'extérieur du bâtiment en empruntant, voir Fig. 10 :

i. soit la porte de sortie "Est", dénommée "E",
ii. soit la porte de sortie "Ouest", dénommée "W",
iii. soit la porte de sortie "Sud", dénommée "S".

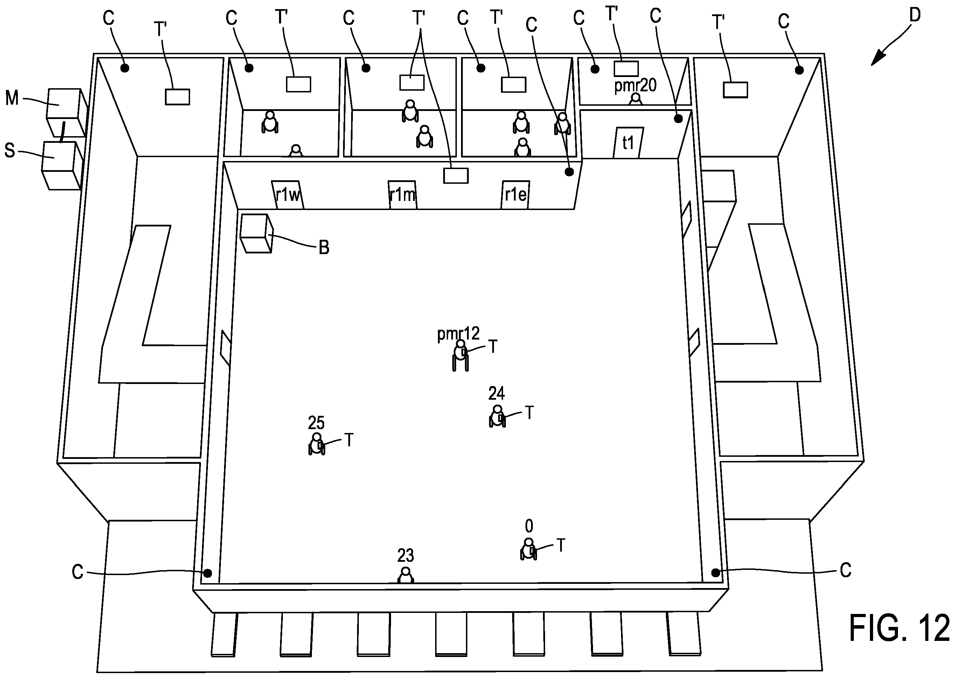

4. Deux escaliers, voir Fig. 12 :

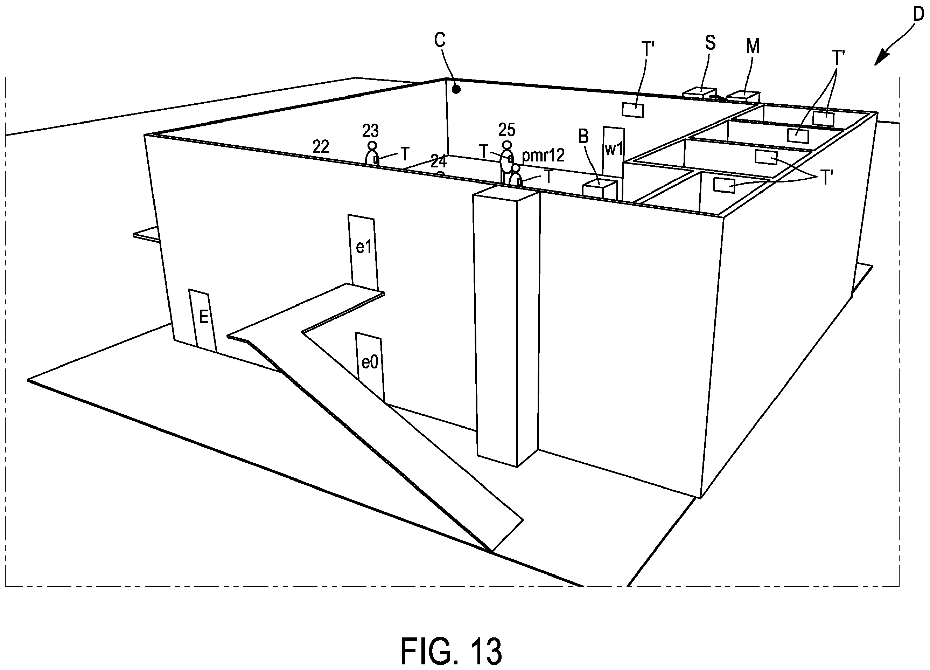

(a) l'escalier "Est" qui est emprunté en sortant du niveau "R1" (porte "e1") pour redescendre vers un corridor au rez-de-chaussée qui débouche dans le hall du rez-de-chaussée en empruntant la porte dénommée "e0", voir Fig. 13 ;

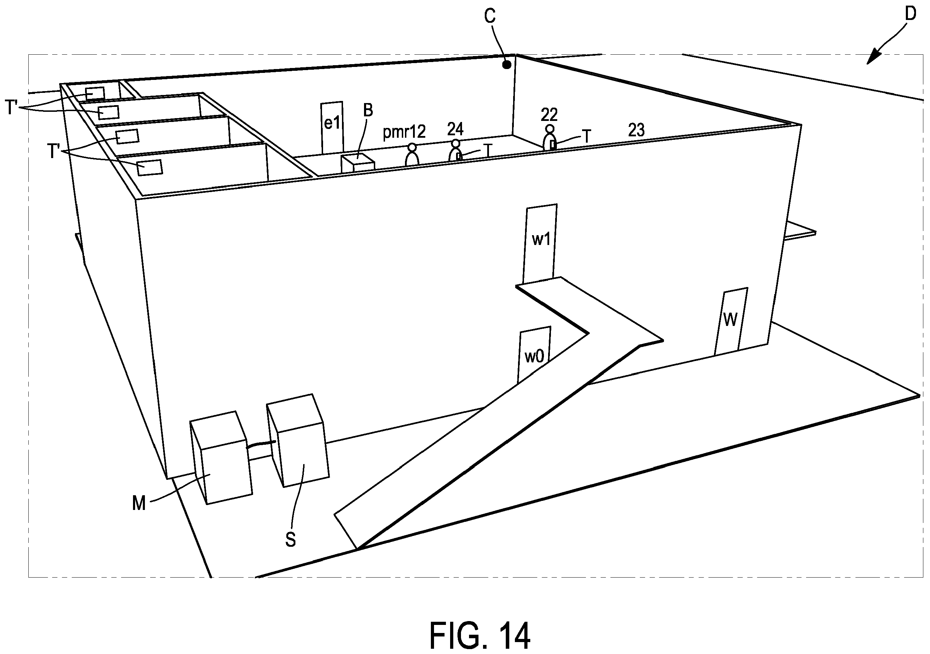

(b) l'escalier "Ouest" qui est emprunté en sortant du niveau "R1" (porte "w1") pour redescendre vers un corridor au rez-de-chaussée qui débouche dans le hall du rez-de-chaussée en empruntant la porte dénommée "w0", voir Fig. 14 ;

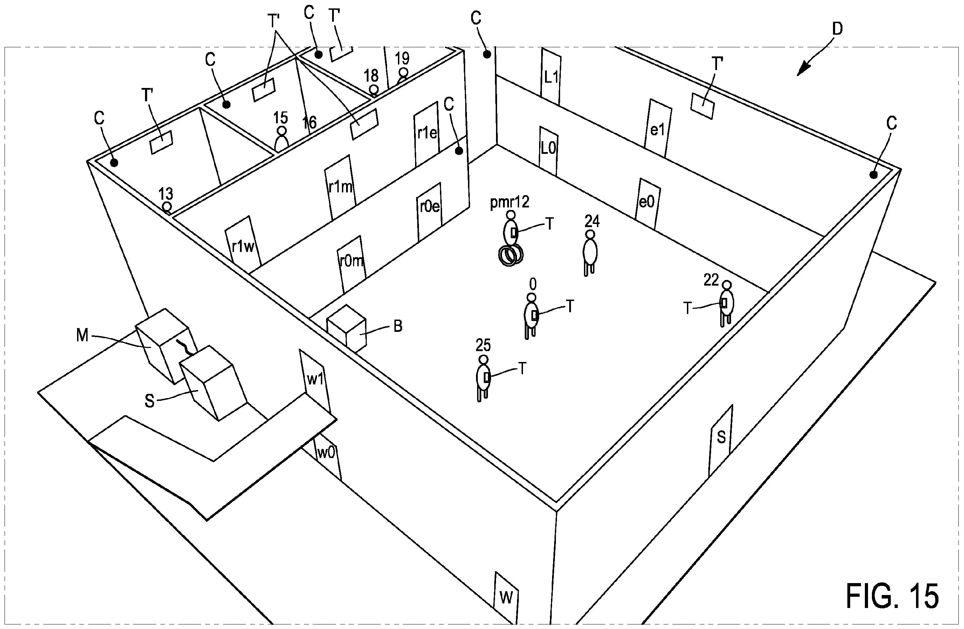

5. Un ascenseur, voir Fig. 15 :

(a) dont la porte au niveau "R1" est dénommée "L1" ;
(b) dont la porte au niveau "R0" est dénommée "L0".

**Extraction des nœuds et arêtes A**

**Nœuds**

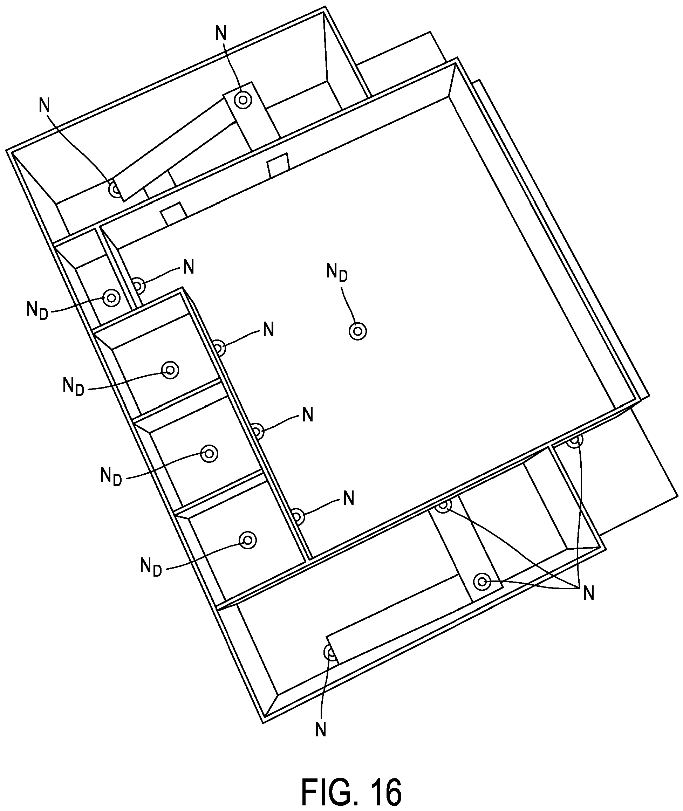

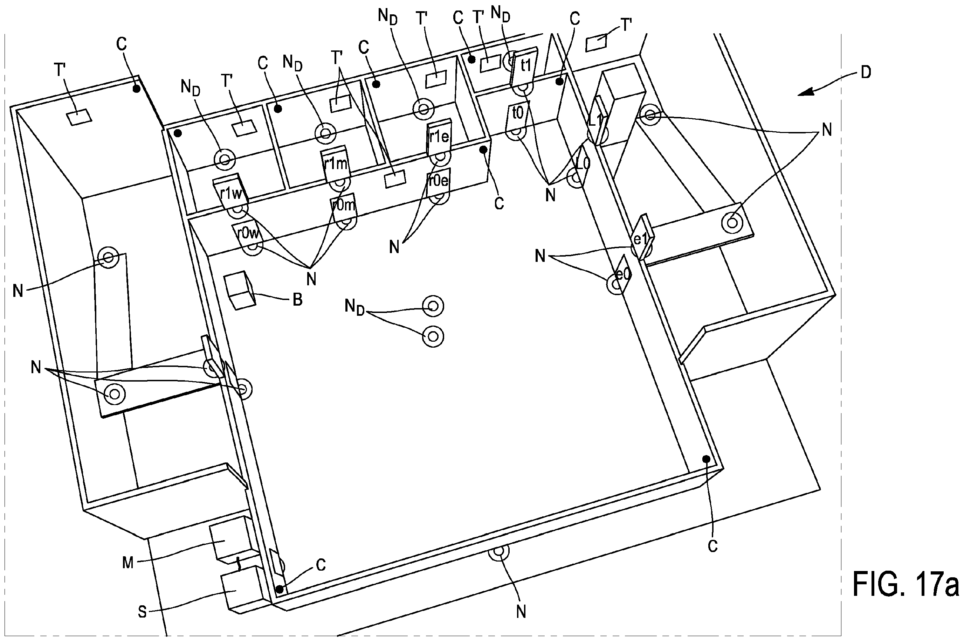

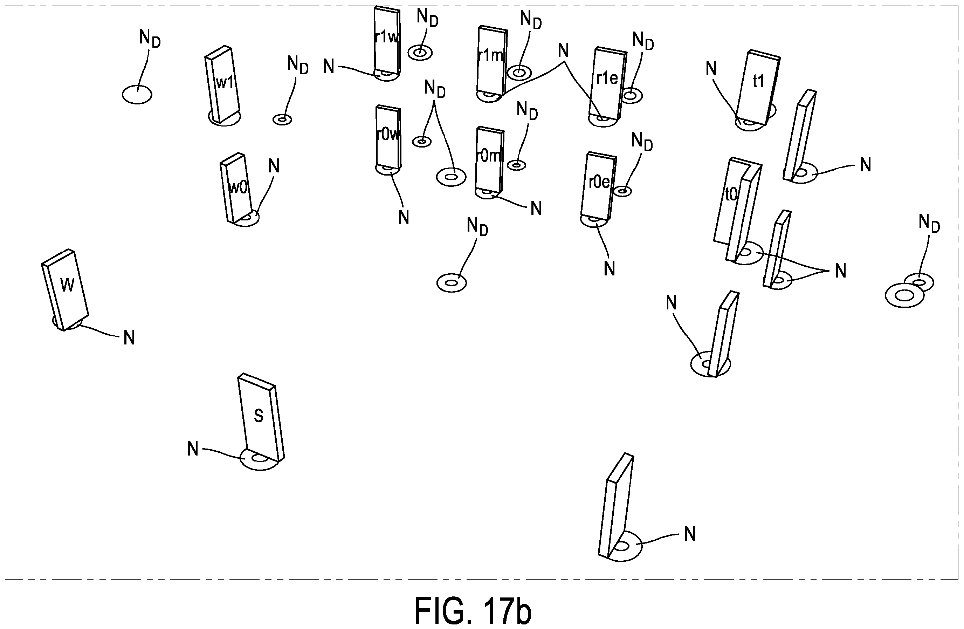

Les nœuds sont des points "virtuels". Ils sont de deux types, voir Figs. 16 - 17 :

1. nœud dispatcheur $N_D$ : il représente le centre géométrique de chacun des divers halls et salles ; ce centre est aussi appelé "centroïde".

2. nœud de passage, qui représente :

(a) un seuil de porte (salle, ascenseur, hall),
(b) un point en extrémité de palier d'escalier (point haut ou bas).

**Arêtes A**

Les arêtes A, liaisons bidirectionnelles sauf cas particuliers, sont des segments de droites virtuelles qui relient deux nœuds successifs sans rencontrer d'obstacles et sans perte de visibilité.

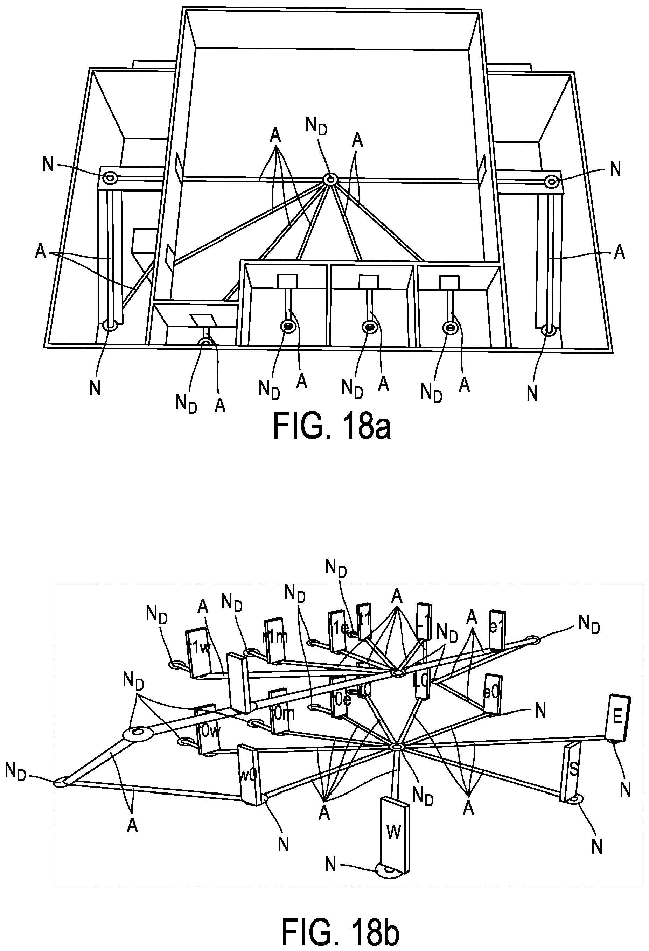

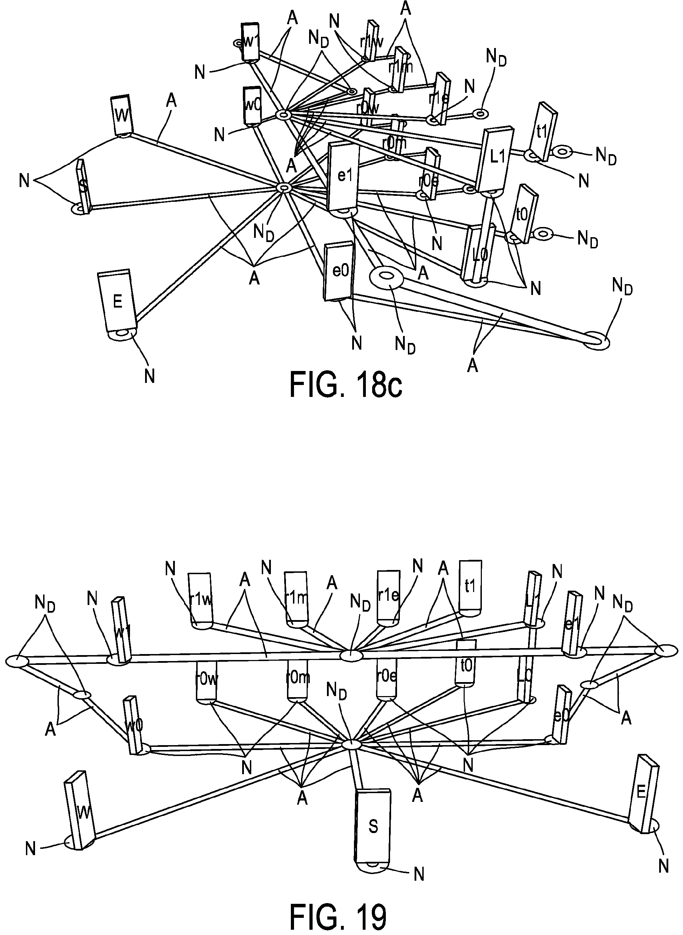

Elles sont définies selon la méthodologie suivante, voir Fig. 18 :

1. "nœud dispatcheur $N_D$" à "nœud de passage" : l'arête relie le nœud "centroïde" d'une salle ou hall à un nœud de passage.

2. "nœud de passage" à "nœud de passage" : l'arête relie le nœud "seuil" d'une porte à un nœud de passage d'une surface de transfert.

A titre d'exemple, on peut considérer les cas suivants, pour les surfaces de transferts :

(a) nœuds seuils des portes d'un niveau au suivant, dans le cas d'ascenseurs, par exemple.
(b) nœuds d'extrémité ou intermédiaires des paliers et palées, dans le cas d'escaliers, rampes d'accès ou escalators, par exemple.

NOTA : Il convient de remarquer, qu'en réalité, ces surfaces de transferts peuvent être, elles-mêmes, définies comme des espaces (cas de corridors), dans les maquettes digitales (BIM ou CIM).
Dans ce cas, les points extrêmes (points "haut", "bas", "intermédiaire") seront considérés comme des "nœuds de passage" reliés aux nœuds dispatcheur $N_D$s des espaces intermédiaires (leurs centroïdes).

**DAG : Graphe orienté acyclique (en anglais « Directed Acyclic Graph »)**

Le Graphe orienté acyclique (DAG) est défini par l'arborescence entièrement constituée des "nœuds" et des "arêtes A" les reliant deux à deux, voir Fig. 19 :

1. A l'étage "R1", le graphe est constitué d'un sous-graphe (en anglais « sub-DAG » "R1"), défini comme suit :

(a) en extrémité du DAG, il y a les 4 nœuds centroïdes des salles "r1w", "r1m", "r1e" et 't1'
(b) 4 arêtes A les relient aux nœuds de passage (seuils des portes de chacune de ces 4 salles) ;
(c) de ces 4 nœuds seuils des portes, partent alors 4 arêtes A qui les relient au nœud dispatcheur $N_D$ (centroïde) du hall attenant et communiquant avec ces 4 salles ; il pourrait être représenté aussi par les arêtes A qui relieraient les 4 nœuds seuils des portes directement vers les nœuds seuil de porte ("Est" et "Ouest") et le nœud seuil escalier, sans passer par le nœud dispatcheur $N_D$ (centroïde) du hall ; ici les arêtes A passent par le nœud dispatcheur $N_D$ (centroïde) car il a été considéré dans cet exemple qu'il fallait passer nécessairement par ce nœud dispatcheur $N_D$ ;
(d) de ce nœud dispatcheur $N_D$ partent 3 arêtes A qui le relient aux 3 portes permettant d'accéder au niveau "Rdc", à savoir par un transfert via l'ascenseur, l'escalier "Est" et l'escalier "Ouest" par les nœuds seuils 'e1', 'w1' et 'L1'.

2. Pour le transfert de l'étage "R1" vers le rez-de-chaussée "Rdc", le graphe comporte un sous-graphe (en anglais « sub-DAG » "R1 to Rdc"), défini comme suit :

(a) chaque nœud seuil de porte de l'escalier ("Est" et "Ouest") est relié par une arête à un nœud extrême du palier supérieur ;
(b) chaque nœud extrême du palier supérieur est relié par une arête à un nœud extrême bas de l'escalier (palier inférieur) ;
(c) chaque nœud bas est relié par une arête à un nœud seuil de la porte d'accès au hall du niveau "Rdc" ;
(d) le nœud seuil de la porte d'ascenseur (niveau R1) est relié par une arête au nœud seuil de la porte d'ascenseur (niveau Rdc).

3. Au niveau "Rdc", le graphe est constitué d'un sous-graphe (en anglais « sub-DAG » "Rdc"), défini comme suit :

(a) en extrémité du DAG, il y a les 4 nœuds centroïdes des salles "r0w", "r0m", "r0e" et "t0" ;
(b) 4 arêtes A les relient aux nœuds de passage (seuils des portes de chacune de ces 4 salles) ;
(c) de ces 4 nœuds seuils des portes et des 3 portes d'accès depuis le niveau "R1" (nœuds "e0", "w0" et "L0") partent alors 7 arêtes A qui les relient au nœud dispatcheur $N_D$ (centroïde) du hall attenant et communiquant avec ces 4 salles et les portes de transfert depuis le niveau "R1" par les nœuds seuils 'e1', 'w1' et 'L1' ; il pourrait être représenté aussi par les arêtes A qui relieraient les 4 nœuds seuils des portes directement vers les nœuds seuil de porte ("E" , "S" et "W") et le nœud seuil escalier, sans passer par le nœud dispatcheur $N_D$ (centroïde) du hall ; ici les arêtes A passent par le nœud dispatcheur $N_D$ (centroïde) car il a été considéré dans cet exemple qu'il fallait passer nécessairement par ce nœud dispatcheur $N_D$ (centroïde);

(d) de ce nœud dispatcheur $N_D$ partent 3 arêtes A qui le relient aux 3 nœuds seuils des portes ("E", "S", "W") permettant de quitter le bâtiment.

## USAGERS : nœuds dispatcheurs $N_D$ associés

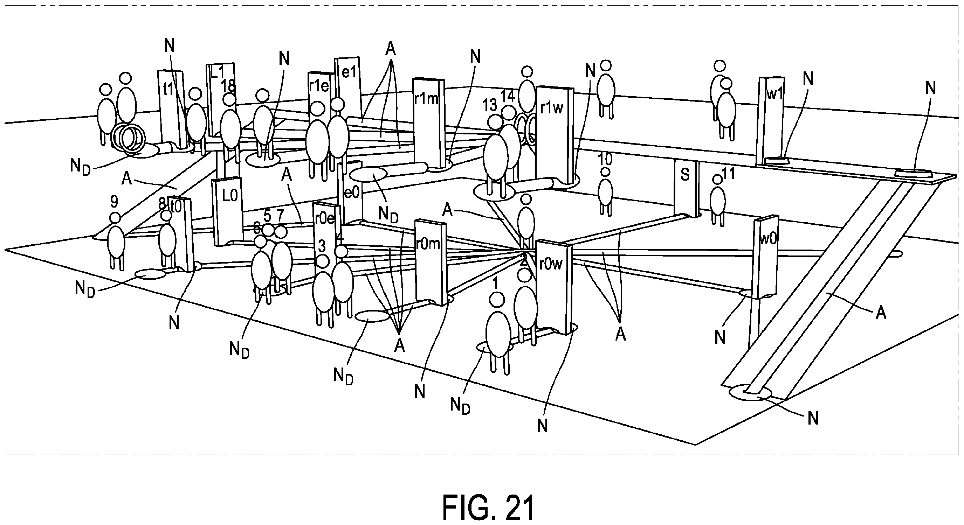

En guise d'illustration, divers utilisateurs (USAGERS) dont des PMR (Personnes à Mobilité Réduite) sont arbitrairement positionnés dans le bâtiment, voir Fig. 21. De ce fait, leur position étant localisée dans un espace (salle, hall, corridor), elles sont alors associées au nœud dispatcheur $N_D$ (centroïde) de cet espace, i.e. :

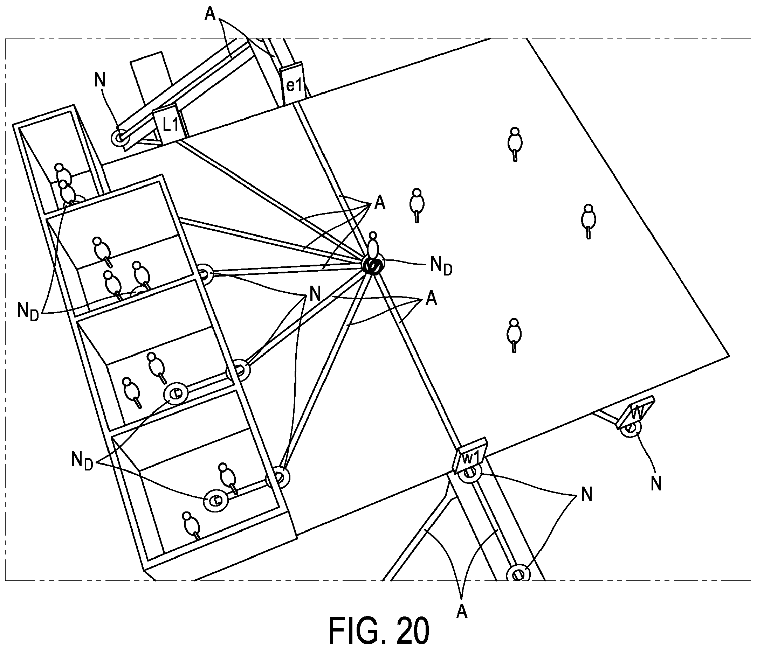

1. A l'étage "R1", les utilisateurs sont identifiés dans les positions illustrées en Fig. 20:

(a) les deux personnes se trouvant en salle "r1w", y étant localisées, sont associées au nœud dispatcheur $N_D$ (centroïde) de cette salle "r1w" ;
(b) les deux personnes se trouvant en salle "r1m", y étant localisées, sont associées au nœud dispatcheur $N_D$ de cette salle "r1m" ;
(c) les trois personnes se trouvant en salle "r1e", y étant localisées, sont associées au nœud dispatcheur $N_D$ de cette salle "r1e" ;
(d) les deux personnes, dont une PMR, se trouvant en salle "t1", y étant localisées, sont associées au nœud dispatcheur $N_D$ de cette salle "t1" ;
(e) les cinq personnes, dont une PMR, se trouvant dans le hall de cet étage, y étant localisées, sont associées au nœud dispatcheur $N_D$ de cet espace de hall.

2. A l'étage "Rdc", les utilisateurs sont identifiés dans les positions illustrées en Fig. 21:

(a) les deux personnes se trouvant en salle "r0w", y étant localisées, sont associées au nœud dispatcheur $N_D$ (centroïde) de cette salle "r0w" ;
(b) les deux personnes se trouvant en salle "r0m", y étant localisées, sont associées au nœud dispatcheur $N_D$ de cette salle "r0m" ;
(c) les trois personnes se trouvant en salle "r0e", y étant localisées, sont associées au nœud dispatcheur $N_D$ de cette salle "r0e" ;
(d) les deux personnes se trouvant en salle "t0", y étant localisées, sont associées au nœud dispatcheur $N_D$ de cette salle "t0" ;
(e) les trois personnes se trouvant dans le hall de cet étage, y étant localisées, sont associées au nœud dispatcheur $N_D$ de cet espace du hall.

## DODAG' : DAG orienté spécifique à chaque usager

Pour rappel, le DAG est global au bâtiment : graphe "nœuds N, ND-arêtes A". Il dépend de l'architecture (répartition des espaces) : il décrit les chemins depuis tout endroit du bâtiment vers les sorties.

Le DODAG', propre à chaque usager, en est une portion (sous-graphe dynamique), démarrant depuis la position courante (usager), pour guider l'usager vers la sortie la plus idoine (guidage optimal selon son profil et les foules présentes), voir Table 1 :

1. pour les usagers, des 4 salles à l'étage "R1", l'évacuation exige de les guider, d'abord, vers les nœuds de passage les plus proches (nœud "seuil de porte" de leur salle). Ils accèdent, dès lors, à l'espace attenant soit le hall du niveau "R1" ("hall R1"). Leur chemin sera alors similaire à ceux déjà présents dans ce "hall R1", i.e. : les PMR (ou habilitation à emprunter certains accès) ; empruntent l'ascenseur (nœud de passage "L1"), tandis que les "non PMR" peuvent emprunter l'ascenseur ou l'un des escaliers ("Est" : nœud de passage "e1", ou "Ouest" : nœud de passage "w1"). Acheminés via l'ascenseur ou les escaliers, ils débouchent dans le "hall Rdc", par les nœuds de passage ("L0", "e0" ou "w0" selon le chemin emprunté pour rejoindre le rez-de-chaussée). Ils doivent ensuite être orientés vers l'une des portes de sorties ("E", "S" ou "W"), selon l'encombrement des listes d'attente de ces 3 portes.

2. De manière similaire, les usagers des 4 salles (niveau Rdc) accèdent aux nœuds "seuil de porte" (nœud de passage) de leur salle pour accéder ainsi au hall du niveau "Rdc" (dit "hall Rdc"). Ils doivent ensuite être orientés vers l'une des 3 sorties ("E", "S" ou "W"), selon l'encombrement de leurs listes d'attente.

Table 1: Elaboration du DODAG' spécifique à chacun des usagers

| Etage | Espace | Usager | Assigné à centroïde (espace) | Couche 1 (Wait list) du noeud (porte) | Relais assigné à centroïde (espace) | Couche 2 (Wait list) cumul en (porte) |
|---|---|---|---|---|---|---|
| R1 | r1w | **P :13,14** | (r1w) | **(r1w)** | (hall R1) | **(L1,e1,w1)** |
| | r1m | **P :15,16** | (r1m) | **(r1m)** | (hall R1) | **(L1,e1,w1)** |
| | r1e | **P :17,18,19** | (r1e) | **(r1e)** | (hall R1) | **(L1,e1,w1)** |
| | t1 | **Pmr :20** | (t1) | **(t1)** | (hall R1) | **(L1)** |
| | t1 | **P :21** | (t1) | **(t1)** | (hall R1) | **(L1,e1,w1)** |
| | hall R1 | **Pmr :12** | (hall R1) | **(L1)** | (stairs,lift) | **(L0)** |
| | hall R1 | **P :22,23,24** | (hall R1) | **(L1,e1,w1)** | (stairs,lift) | **(L0,e0,w0)** |
| Rdc | r0w | **P :1,2** | (r0w) | **(r0w)** | (hall Rdc) | **(E,S,W)** |
| | r0m | **P :3,4** | (r0m) | **(r0m)** | (hall Rdc) | **(E,S,W)** |
| | r0e | **P :5,6,7** | (r0e) | **(r0e)** | (hall Rdc) | **(E,S,W)** |
| | t0 | **P :8,9** | (t0) | **(t0)** | (hall Rdc) | **(E,S,W)** |
| | hall0 | **P :0,10,11** | (hall Rdc) | **(E,S,W)** | **Evacués** | **Evacués** |

| Usager | Couche 1 (Wait list) du noeud (porte) | Couche 2 (Wait list) cumul en (porte) | Relais assigné à centroïde (espace) | Couche 3 (Wait list) cumul en (porte) | Relais assigné à centroïde (espace) | Couche 4 (Wait list) cumul en (porte) |
|---|---|---|---|---|---|---|
| **P :13,14** | **(r1w)** | **(L1,e1,w1)** | (stairs,lift) | **(L0,e0,w0)** | (hall Rdc) | **(E,S,W)** |
| **P :15,16** | **(r1m)** | **(L1,e1,w1)** | (stairs,lift) | **(L0,e0,w0)** | (hall Rdc) | **(E,S,W)** |
| **P : 17,18,19** | **(r1e)** | **(L1,e1,w1)** | (stairs,lift) | **(L0,e0,w0)** | (hall Rdc) | **(E,S,W)** |
| **Pmr :20** | **(t1)** | **(L1)** | (lift) | **(L0)** | (hall Rdc) | **(E,S,W)** |
| **P :21** | **(t1)** | **(L1,e1,w1)** | (stairs,lift) | **(L0,e0,w0)** | (hall Rdc) | **(E,S,W)** |
| **Pmr :12** | **(L1)** | **(L0)** | (hall Rdc) | **(E,S,W)** | **Evacués** | **Evacués** |
| **P : 22,23,24** | **(L1,e1,w1)** | **(L0,e0,w0)** | (hall Rdc) | **(E,S,W)** | **Evacués** | **Evacués** |
| **P :1,2** | **(r0w)** | **(E,S,W)** | **Evacués** | **Evacués** | **Evacués** | **Evacués** |
| **P :3,4** | **(r0m)** | **(E,S,W)** | **Evacués** | **Evacués** | **Evacués** | **Evacués** |
| **P :5,6,7** | **(r0e)** | **(E,S,W)** | **Evacués** | **Evacués** | **Evacués** | **Evacués** |
| **P :8,9** | **(t0)** | **(E,S,W)** | **Evacués** | **Evacués** | **Evacués** | **Evacués** |
| **P : 0,10,11** | **(E,S,W)** | **Evacués** | **Evacués** | **Evacués** | **Evacués** | **Evacués** |

(a) Listes d'attente aux nœuds de passage : couche (1) puis transfert à couche (2)
(b) Listes d'attente aux nœuds de passage : couches (1), (2) cumul à (3) et (4)

## Listes d'attente et évacuation guidée optimale

A partir des DODAG's, établis pour chaque usager (voir Table 1), les listes d'attente des nœuds de passage sont alors établies depuis les nœuds les plus lointains du DAG (salles du niveau "R1") jusqu'aux nœuds cibles (portes de sorties ("E", "S", "W")) :

1. Les listes d'attente des nœuds cibles sont établies, à partir des positions des usagers présents dans le hall "R0" (usagers associés au nœud dispatcheur $N_D$ de l'espace : "hall R0"). La couche 1 de ces listes contient alors la liste des personnes et leur position, en termes de distance pour atteindre la porte.

Pour simplifier la compréhension, un damier virtuel de maille (50cmx50cm) est projeté sur la surface des planchers. Les usagers sont placés au centre des cellules du damier.

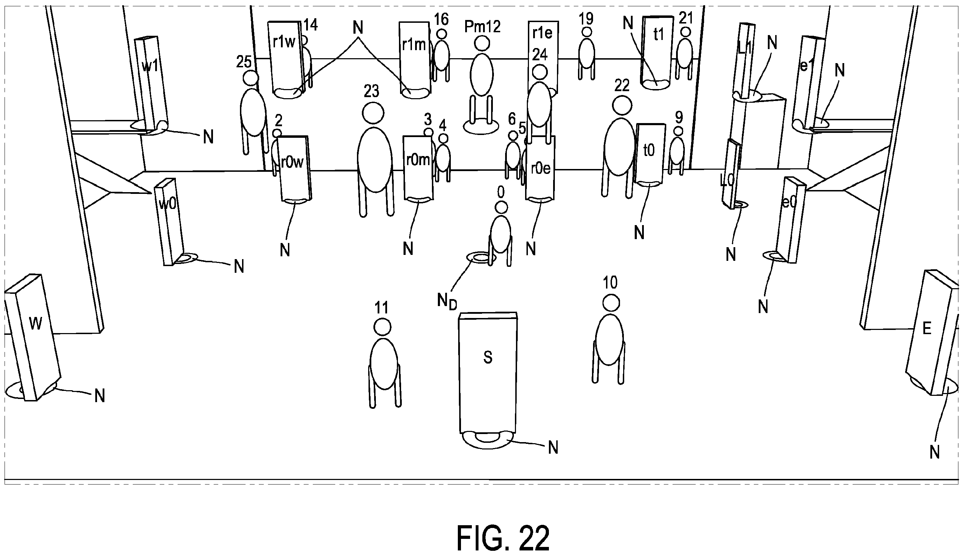

Leur distance jusqu'à la porte de sortie, peut être traduite en termes de nombre de cases séparant l'usager de la porte, afin d'en faciliter l'illustration, voir Fig. 22 :

(a) porte "E" :

$$waitList(E) = [P0 : 27cases]; [P10 : 12cases]; [P11 : 20cases] \quad (1)$$

(b) porte "S"

$$waitList(S) = [P0 : 18cases]; [P10 : 7cases]; [P11 : 5cases] \quad (2)$$

(c) porte "W"

$$waitList(W) = [P0 : 30cases]; [P10 : 21cases]; [P11 : 13] \quad (3)$$

2. Pour les autres usagers, ils doivent d'abord pouvoir accéder au hall (« hall Rdc ») afin d'être associés ensuite au nœud centroïde du hall et pouvoir être transférés sur les liste d'attente des 3 portes de sortie (car elles sont attenantes au "hall Rdc"). En effet, ce centroïde hérite des listes d'attente des nœuds de passage attenants, à savoir les nœuds (seuils des portes) : (w0), (r0w), (r0m), (r0e), (t0), (L0) et (e0).

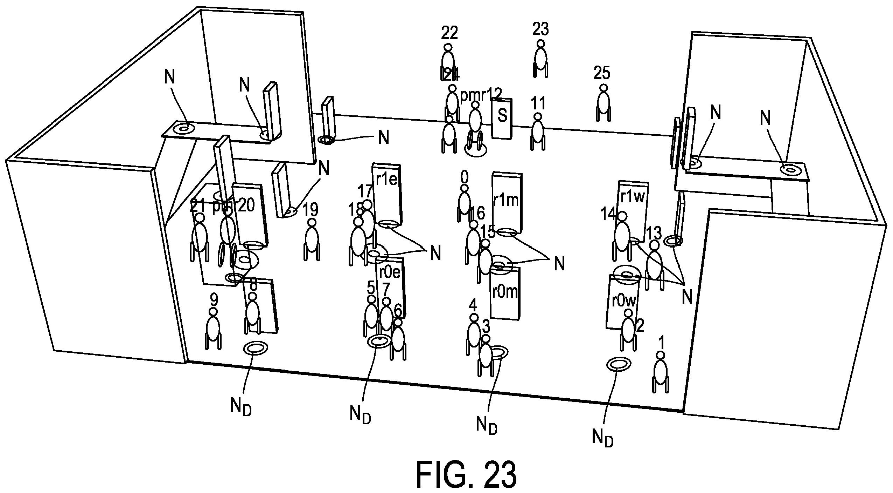

Pour les 3 portes de sortie ("E", "S", "W"), elles héritent ainsi des listes des couches supérieures (couches 2 et plus). Ces listes sont établies comme suit, voir Fig. 23 :

(a) porte "w0" : hérite de la liste d'attente du nœud de la porte (w1), depuis étage "Rdc", couche de rang immédiatement supérieur

(b) porte "r0w" :

$$waitList(r0w) = [P1 : 8cases]; [P2 : 2cases] \quad (4)$$

(c) porte "r0m" :

$$waitList(r0w) = [P3 : 6cases]; [P4 : 5cases] \quad (5)$$

(d) porte "r0e" :

$$waitList(r0w) = [P5 : 3cases]; [P6 : 6cases]; [P7 : 3cases] \quad (6)$$

(e) porte "t0" :

$$waitList(r0w) = [P8 : 0case]; [P9 : 4cases] \quad (7)$$

(f) porte "L0" : hérite de la liste d'attente du nœud de la porte (L1), depuis étage "R1", couche de rang immédiatement supérieur,

(g) porte "e0" : hérite de la liste d'attente du nœud de la porte (e1), depuis étage "R1", couche de rang immédiatement supérieur.

NOTA : Il convient de remarquer que ces listes des nœuds de passage sont transmises, par héritage, à celles des 3 portes de sortie. La distance (nombre de cases) depuis la position courante de l'usager à la porte de sortie est obtenue en ajoutant la distance entre le nœud de la porte (de la salle, exemple "r0w") à la porte de sortie (exemple, sortie "S").

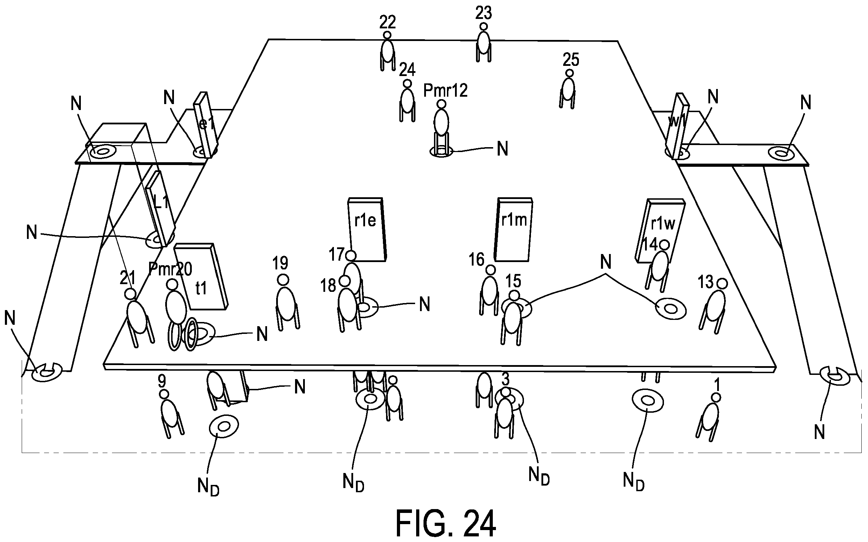

3. Partant des portes de sortie (comme niveau le plus bas en termes de couches dans les listes d'attente), les couches les plus lointaines seraient celles qui seront héritées des nœuds (seuils de porte) des salles de l'étage "R1"), voir Fig. 24 :

(a) escalier "w0" : hérite de la liste d'attente du nœud de la porte (w1), depuis étage "R1", couche de rang immédiatement supérieur,

(b) porte "r1w" :

$$waitList(r1w) = [P13 : 6cases]; [P14 : 2cases] \ (8)$$

(c) porte "r1m" :

$$waitList(r1m) = [P15 : 6cases]; [P16 : 5cases] \ (9)$$

(d) porte "r1e" :

$$waitList(r1e) = [P17 : 3cases]; [P18 : 5cases]; [P7 : 8cases] \ (10)$$

(e) porte "t1" :

$$waitList(t1) = [Pmr20 : 2cases]; [P21 : 4cases] \ (11)$$

## Mise en œuvre de l'algorithme d'optimisation des listes d'attente

Une fois les diverses listes d'attente des nœuds de passage établies, les usagers y sont rangés selon la distance aux nœuds de passages intermédiaires concernés, lesquelles listes ordonnées sont héritées de proche en proche par les nœuds de passage jusqu'à aboutir aux portes de sortie du bâtiment ou des zones de replis et abris (cas des PMR, par exemple, qui doivent rejoindre les zones qui leur sont spécialement aménagées et dédiées).

Afin de montrer la performance de l'algorithme développé et objet de la revendication de la présente invention, deux exemples sont choisis en guise d'illustration.

A cet effet, deux salles de réunion sont choisies avec deux configurations particulières, pour justifier des performances de l'algorithme développé :

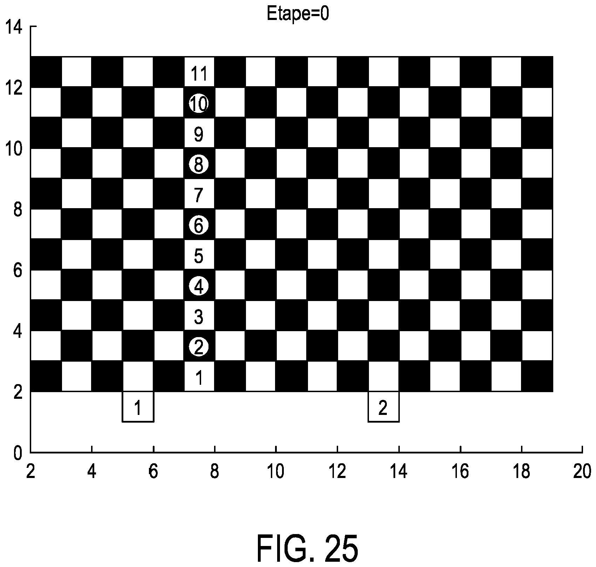

### 1. Cas d'extraction en forme de "Zip", voir Fig. 25.

(a) Par le critère de la distance la plus courte entre l'usager et les portes, ce serait la porte "1" qui accueillerait les usagers.

(b) On adopte l'hypothèse qu'il faille, en mouvement, toujours laisser une case vide entre deux usagers (éviter les chocs). On adopte aussi l'hypothèse que la vitesse de déplacement est uniforme (en général : une moyenne de 1.2 m/s, en cadence normale).

(c) Il aurait alors fallu 3 pas de temps pour évacuer la personne "P :1" puis "((1+1).10) personnes restantes" pas de temps soit un total de 23 pas (une case par pas de temps).

(d) En gérant de manière optimisée les listes d'attente des 2 portes, on réduit à 17 pas le temps d'évacuation complète, les listes d'attente étant définies comme suit, voir Fig. 25 :

| Usager | Porte :1 | Porte :2 |
|--------|----------|----------|
| 1 | 3 pas | 7 pas |
| 2 | 4 | 8 |
| 3 | 5 | 9 |
| 4 | 6 | 10 |
| 5 | 7 | 11 |
| 6 | 8 | 12 |
| 7 | 9 | 13 |
| 8 | 10 | 14 |
| 9 | 11 | 15 |
| 10 | 12 | 16 |
| 11 | 13 | 17 |

Il convient de rappeler que chaque usager occupera, dans la liste réordonnée de chaque porte, la position maximale entre la sienne, avant réarrangement, et la position de l'usager le précédant, à laquelle sont ajoutées deux positions (devant observer une cellule vide pour éviter les chocs avec le précédent usager sur la liste). Il sera assigné à la liste où il occupera le rang le plus faible entre les deux listes.

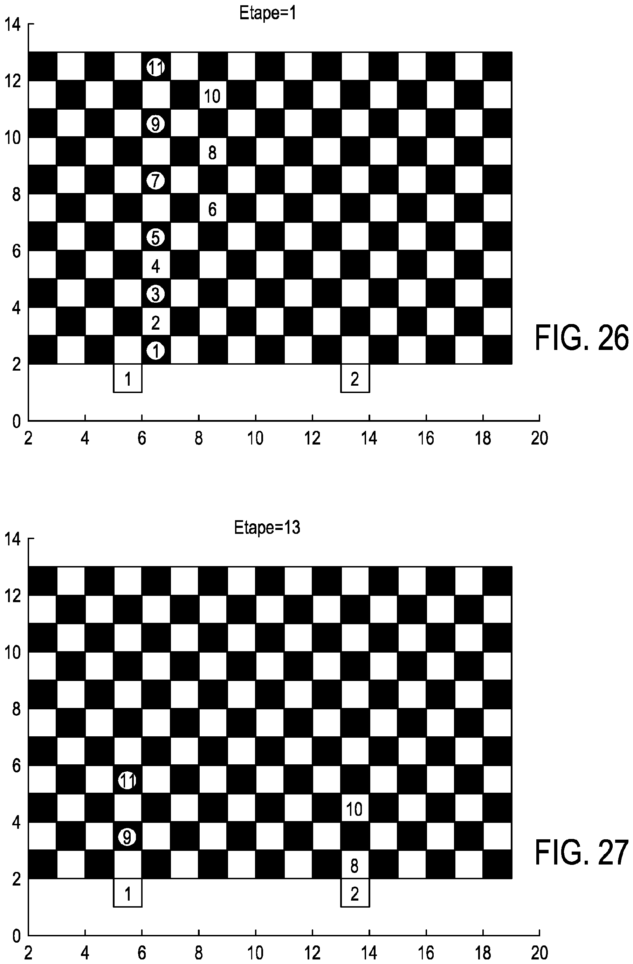

Ainsi les listes, une fois ordonnée, en tenant compte des critères (laisser un pas entre deux usagers se suivant) donnent les positions d'évacuation optimisée suivantes, voir Fig. 26 - 27 :

| Usager | Porte :1 | Porte :2 | affectation : évacuation |
|--------|----------|----------|--------------------------|
| 1 | $\max(3,0+1)=3$ | $\max(7,0+1)=7$ | $\min(3,7)=$**3** pas @porte 1 |
| 2 | $\max(4,3+2)=5$ | $\max(8,0+1)=8$ | $\min(5,8)=$**5** p. @porte 1 |
| 3 | $\max(5,5+2)=7$ | $\max(9,0+1)=9$ | $\min(7,9)=$**7** p. @porte 1 |
| 4 | $\max(6,7+2)=9$ | $\max(10,0+1)=10$ | $\min(9,10)=$**9** p. @porte 1 |
| 5 | $\max(7,9+2)=11$ | $\max(11,0+1)=11$ | $\min(11,11)=$**11** p. @porte 1 (ou 2 |
| 6 | $\max(8,11+2)=13$ | $\max(12,0+1)=12$ | $\min(13,12)=$**12** p. @porte 2 |
| 7 | $\max(9, 11+2)=13$ | $\max(13,12+2)=14$ | $\min(13,14)=$**13** p. @porte 1 |
| 8 | $\max(10,13+2)=15$ | $\max(14,12+2)=14$ | $\min(15,14)=$**14** p. @porte 2 |
| 9 | $\max(11, 13+2)=15$ | $\max(15,14+2)=16$ | $\min(15,16)=$**15** p. @porte 1 |
| 10 | $\max(12, 15+2)=17$ | $\max(16,14+2)=16$ | $\min(17,16)=$**16** p. @porte 2 |
| 11 | $\max(13,15+2)=17$ | $\max(17,16+2)=18$ | $\min(17,18)=$**17** p. @porte 1' |

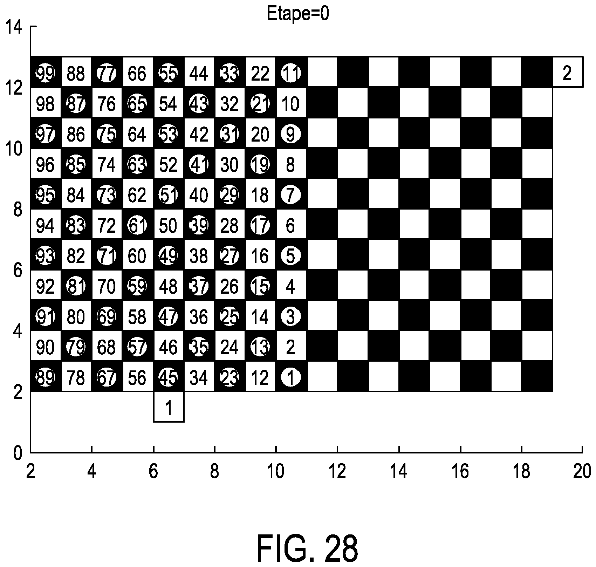

**2. Cas d'extraction dans le cas d'une salle densément occupée (99 personnes) et ayant 2 portes, voir Fig. 28**

(a) Par le critère de la distance la plus courte entre l'usager et les portes, on dénombrerait 89 usagers assignés à la porte "1", 6 usagers assignés à la porte "2", 4 usagers étant à égale distance des deux portes.

(b) On adopte l'hypothèse qu'il faille, en mouvement, toujours laisser une case vide entre deux usagers (éviter les chocs). On adopte aussi l'hypothèse que la vitesse de déplacement est uniforme (en général : une moyenne de 1.2 m/s, en cadence normale).

(c) Il aurait fallu alors, au minimum, 177 pas de temps pour évacuer entièrement la salle : 1 pas pour la personne "P45" et ((1+1) pas pour les 88 autres usagers les plus proches de la porte "1" que de la porte "2").

(d) En gérant de manière optimisée les listes d'attente des 2 portes, on réduit à 103 pas le temps d'évacuation complète, les listes d'attente étant d'abord constituées puis gérées de manière similaire à celle explicitée dans le cas du dégagement en forme de "Zip".

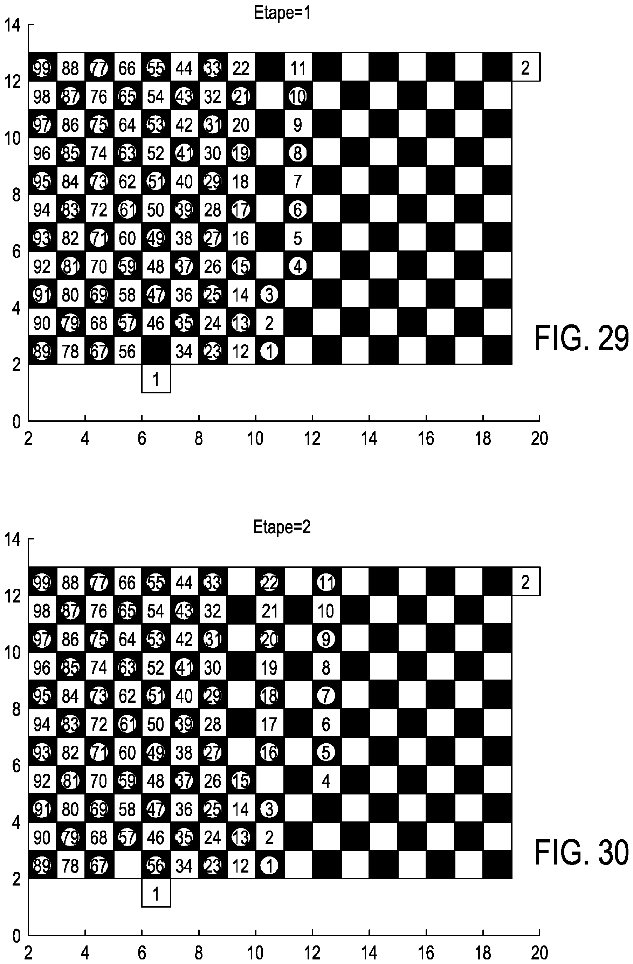

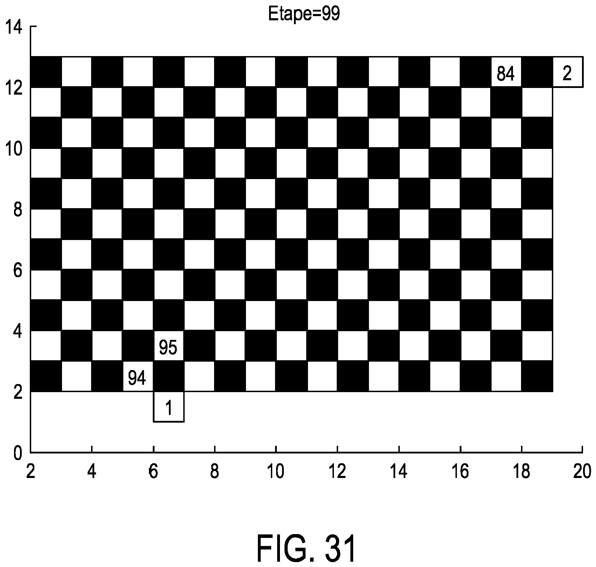

Quelques positions, en des instants arbitrairement choisis, sont illustrées par Fig. 30-31.

**EP 4 063 789 A1**

**Bibliographie**

E. Cetin, K. Dimitropoulos, B. Gouverneur, N. Grammalidis, O. Gunay, Y. H. Habiboglu, B. U. Toreyin, and S. Verstockt, "Video fire détection: a review," Digital Signal Processing, vol. 23, no. 6, pp. 1827- 1843, 2013.

S. Cosar, G. Donatiello, V. Bogorny, C. Garate, L. Alvares, F. Bremond. Towards Abnormal Trajectory and Event Détection in Video Surveillance. IEEE Transactions on Circuits and Systems for Video Technology, 2016.

J. Fonollosa, A. Solórzano, S. Marco, Chemical Sensor Systems and Associated Algorithms for Fire Détection: A Review, Sensors, Volume: 18, 2018.

C. Jorgensen and S. Powell, Solving 0-1 Minimax Problems, in The Journal of the Operational Research Society Vol. 38, No. 6 (Jun., 1987), pp. 515-522.

Omprakash Gnawali and Philip Levis. The ETX Objective Function for RPL, draft-gnawali-roll-etxof-00, IETF, 2010.

Omprakash Gnawali and Philip Levis. The Minimum Rank with Hysteresis Objective Function. RFC 6719. RFC Editor, 2012.

H. Wang, A. Klaser, C. Schmid, and C.-L. Liu, "Action récognition by dense trajectories," in Computer Vision and Pattern Récognition (CVPR), 2011 IEEE Conférence on, June 2011, pp. 3169-3176.

**Revendications**

**1.** Procédé de localisation d'utilisateurs et de guidage actualisé des déplacements des utilisateurs dans un bâtiment qui présente au moins des espaces fermés, délimités par des obstacles aux déplacements des utilisateurs, ledit guidage actualisé étant réalisé en fonction d'un évènement dans le bâtiment, suivant des chemins menant vers un ou plusieurs lieux cibles donnés ("E", "S", "W"),

ledit guidage actualisé étant adapté à chaque utilisateur,

avec des objets connectés (T, T') en liaison de communication sans fil avec un serveur des ressources à distance qui est un serveur de contrôle (S) accessible par un réseau de communication,

ledit procédé comprenant les étapes suivantes :

i-à partir d'une maquette numérique du bâtiment (BIM, CIM),

- des moyens de calcul (M) reliés à un serveur de contrôle (S) définissent et calculent, de manière automatique, des nœuds,

les nœuds se répartissant entre des nœuds dispatcheurs ($N_D$) et des nœuds de passage (N) ; les nœuds de passage (N) étant des points d'un chemin devant être emprunté par les utilisateurs pour se déplacer vers un ou divers lieux cibles donnés ("E", "S", "W") ; les nœuds de passage (N) étant chacun associés à un nœud dispatcheur ($N_D$),

- les moyens de calcul (M) calculent, de manière automatique, des arêtes (A), chaque arête reliant deux nœuds (N, $N_D$) successifs en traversant les espaces sans rencontrer les obstacles,

- les moyens de calcul (M) reliés au serveur de contrôle (S) assignent, à chaque nœud de passage (N), une liste d'attente d'utilisateurs actualisée ; à partir des profils d'utilisateurs, chaque profil d'utilisateur déterminant des nœuds (N, $N_D$) et arêtes (A), spécifiques à chaque profil, par lesquels peuvent se déplacer les utilisateurs ;

- les moyens de calcul (M) calculent automatiquement, en tenant compte des obstacles, un graphe orienté acyclique (DAG) de déplacement vers le ou les divers lieux cibles ("E", "S", "W"), constitué avec les nœuds (N, $N_D$) et les arêtes (A),

ii- des capteurs (C) communiquant avec le serveur de contrôle (S), et les moyens de calcul (M), détectent un évènement automatiquement, semi-automatiquement ou manuellement, et sa localisation réelle dans le bâtiment, qui est stockée sur le serveur de contrôle (S) ;

iii- les moyens de calcul (M) identifient avec des bornes de positionnement (B), la présence de chaque utilisateur situé dans le bâtiment, à une borne de positionnement (B),

l'identification de la présence de l'utilisateur étant réalisée par l'interaction entre les moyens de calcul (M) et la borne de positionnement (B) devant laquelle se situent l'utilisateur et/ou les objets connectés (T, T'),

sans mesurer la puissance du signal de réception des objets connectés (T, T'), les bornes de positionnement (B) étant situées à des nœuds de passage (N) avec un degré de connectivité supérieur ou égal à 3, et étant des bornes de localisation et /ou de guidage,

les bornes de positionnement (B) ayant une position identifiée dans la maquette numérique du bâtiment (BIM, CIM) ;

iv- en fonction de l'événement qui entraine l'inaccessibilité de certains nœuds (N, $N_D$) du graphe orienté acyclique (DAG), les moyens de calcul (M) calculent un graphe orienté acyclique dit 'actualisé' (DAG') de déplacement vers le ou les lieux cibles ("E", "S", "W");

v- les moyens de calcul (M) transposent les positions des utilisateurs aux bornes de positionnement dans la maquette numérique (BIM, CIM) et calculent le nœud dispatcheur ($N_D$) associé à chaque utilisateur et situé le plus près de l'utilisateur ;

vi- à partir du graphe orienté acyclique actualisé (DAG') et du nœud dispatcheur ($N_D$) associé à chaque utilisateur, les moyens de calcul (M) calculent un sous-graphe associé (DODAG') par utilisateur qui correspond au chemin personnalisé à chaque utilisateur vers un lieu cible donné ("E", "S", "W"),

le sous-graphe associé (DODAG') par utilisateur étant calculé à l'aide :

- d'une « fonction objectif individuelle » pour chaque nœud dispatcheur ($N_D$, basée sur le profil de l'utilisateur, construite pour :

  • attribuer à chaque utilisateur, et actualiser, tous les nœuds de passage (N) associés au nœud dispatcheur ($N_D$), à proximité duquel se trouve l'utilisateur,
  • constituer et actualiser des listes d'attente de chaque nœud de passage (N) associé au nœud dispatcheur ($N_D$), pour l'utilisateur,
  • constituer et actualiser des listes d'attente de chaque nœud de passage (N) pour l'utilisateur dans l'ensemble du bâtiment,
  permettant d'obtenir un ou plusieurs sous-graphes associés (DODAG') par utilisateur,

- d'une «fonction objectif générale» construite à partir des «fonctions objectif individuelles» de tous les utilisateurs,
qui présente en entrée les listes d'attente de l'ensemble de chaque nœud de passage (N) de l'ensemble du bâtiment de tous les utilisateurs, et en sortie les sous-graphes (DODAG') associés de tous les utilisateurs, la « fonction objectif générale » délivrant à chaque utilisateur son sous-graphe (DODAG') calculé pour optimiser l'ensemble des « fonctions objectif individuelles » de tous les utilisateurs, par rapport à des paramètres d'entrée,

les moyens de calcul (M) réitèrent les étapes ii à vi, pour actualiser le guidage spatialement et temporellement, de chaque utilisateur,
à une fréquence temporelle donnée et adaptée à l'évènement,
vii- les moyens de calcul (M) guident, à chaque borne de positionnement, chaque utilisateur, via un objet connecté (T) porté par l'utilisateur ou des objets connectés (T') du bâtiment ou la borne de positionnement (B), à suivre son sous-graphe (DODAG') associé, vers un lieu cible donné ("E", "S", "W").

2. Procédé selon la revendication précédente, dans lequel l'objet de la personne connecté (T) et le serveur de contrôle (S) permettent, devant chaque borne de positionnement, la localisation et /ou le guidage de l'utilisateur, et les bornes de positionnement (B) échangent des patterns numérisés ou imprimés avec l'objet connecté (T) de l'utilisateur.

3. Procédé selon l'une des revendications précédentes, dans lequel des objets connectés (T') du bâtiment, tels que des caméras connectées, sont configurés pour identifier la présence des utilisateurs, à chaque borne de positionnement (B) connectée au serveur de contrôle (S).

4. Procédé selon l'une des revendications précédentes, dans lequel les bornes de positionnement (B) sont des bornes connectées au serveur de contrôle (S) et communiquent à ce dernier la présence de l'utilisateur.

5. Procédé selon l'une des revendications 1 ou 2, dans lequel les bornes de positionnement (B) ne sont pas connectées au serveur de contrôle (S).

6. Procédé selon l'une des revendications précédentes, dans lequel les bornes de positionnement (B) :

- sont situées à des zones ou des points d'intérêt tels que des intersections d'itinéraires, des changements directionnels de flux, des singularités visuelles, des emplacements de ressources telles que des extincteurs ; et
- ces zones ou points d'intérêt sont extraits et calculés à partir des maquettes numériques (BIM, CIM) ou d'un graphe de connectivité représentant les espaces fermés ou ouverts.

7. Procédé selon l'une des revendications précédentes, dans lequel sont associées aux bornes de positionnement via le réseau de communication :

   - des images « immersives », par exemple, sphériques, 360..., avec une information de navigation telle que la direction, le sens, fonction de l'utilisateur,
   qui sont envoyées à l'objet connecté, ou
   - des images transmises par l'objet connecté (T, T') au serveur (S) et dans lesquelles est ajoutée une information de navigation.

8. Procédé selon l'une des revendications précédentes, dans lequel les obstacles comprennent des parois ou des murs, mais aussi des objets ou autres obstructions aux passages des utilisateurs qui peuvent apparaitre lors des événements.

9. Procédé selon l'une des revendications précédentes, dans lequel l'optimisation de la « fonction objectif générale » est réalisée avec l'une des stratégies suivantes :

   - linéaire ;
   - MRHOF;
   - ETXOF;
   - stratégie min max ;
   - logique floue.

10. Procédé selon l'une des revendications précédentes, dans lequel les profils des utilisateurs comportent les informations suivantes, en vue de calculer le DODAG' personnalisé :

    - catégorie de mobilité : telle que personne à Mobilité Réduite, enfant ;
    - l'âge de l'utilisateur ;
    - présence d'autres utilisateurs spécifiques ;
    - profils différenciés.

11. Procédé selon la revendication précédente, dans lequel les paramètres d'entrée sont un temps et/ou une distance de parcours des utilisateurs vers le ou les lieux cibles ("E", "S", "W").

12. Procédé selon l'une des revendications précédentes, dans lequel l'événement est une urgence, et le procédé permet d'évacuer les utilisateurs vers les lieux cibles ("E", "S", "W") qui sont des sorties du bâtiment ou des zones de replis et abris.

13. Procédé selon l'une des revendications précédentes, dans lequel les moyens de calcul (M) déterminent également la position de l'utilisateur dans le bâtiment par triangulation à partir de la mesure de la puissance des objets connectés (T, T').

14. Dispositif de localisation d'utilisateurs et de guidage des déplacements des utilisateurs dans un bâtiment qui présente au moins un espace fermé, délimité par des obstacles aux déplacements des utilisateurs,
    ledit guidage étant réalisé en fonction d'un évènement dans le bâtiment, suivant des chemins menant vers un ou plusieurs lieux cibles donnés ("E", "S", "W") le guidage étant adapté à chaque utilisateur,
    ledit dispositif comprenant:

    • un serveur des ressources à distance qui est un serveur de contrôle (S) accessible par un réseau de communication ;
    • des capteurs (C) communiquant avec le serveur de contrôle (S), et des moyens de calcul (M), qui détectent un évènement automatiquement, semi-automatiquement ou manuellement, et sa localisation réelle dans le bâtiment, qui est stockée sur le serveur de contrôle (S) ;
    • des bornes de positionnement (B) servant à confirmer la présence de l'utilisateur qui est transcrite dans une maquette numérique (BIM, CIM) par le serveur de contrôle (S),
    • des objets connectés (T, T') en liaison de communication sans fil avec le serveur de contrôle (S),
    • des moyens de calcul (M) reliés au serveur de contrôle (S) qui sont configurés pour :

i- à partir d'une maquette numérique du bâtiment (BIM, CIM),

- calculer des nœuds (N, $N_D$) se répartissant entre : des nœuds dispatcheurs ($N_D$), et des nœuds de passage (N), les nœuds de passage (N) étant des points du chemin devant être emprunté par les utilisateurs pour se déplacer vers le ou les divers lieux cibles donnés ("E", "S", "W") en évitant les obstacles ;
- calculer des arêtes (A), chaque arête reliant deux nœuds (N) successifs en traversant les espaces sans rencontrer les obstacles
- assigner, à chaque nœud de passage, une liste d'attente d'utilisateurs, à partir de profils d'utilisateurs, chaque profil d'utilisateurs déterminant des nœuds (N, $N_D$) et arêtes (A) par lesquels peuvent se déplacer les utilisateurs ;
- calculer automatiquement un graphe orienté acyclique (DAG) de déplacement vers les lieux cibles ("E", "S", "W"), constitué avec les nœuds (N, $N_D$) et les arêtes (A), et spécifique à chaque profil d'utilisateur,

ii+iii- identifier avec les bornes de positionnement (B), la présence de chaque utilisateur situé dans le bâtiment, devant une borne de positionnement,

l'identification de la présence de l'utilisateur étant réalisée par l'interaction entre les moyens de calcul (M) et la borne de positionnement (B) à laquelle se situe l'utilisateur, et/ou les objets connectés (T, T'), sans mesurer la puissance du signal de réception des objets connectés (T, T') les bornes de positionnement (B) étant situées à des nœuds de passage (N) avec un degré de connectivité supérieur ou égal à 3, et étant des bornes de localisation et /ou de guidage,
la ou les bornes de positionnement (B) ayant une position identifiée dans la maquette numérique du bâtiment (BIM, CIM) ;

iv- calculer un graphe orienté acyclique dit 'actualisé' (DAG') de déplacement vers les lieux cibles ("E", "S", "W") en fonction de l'événement qui entraine l'inaccessibilité de certains nœuds (N, $N_D$) du graphe orienté acyclique (DAG) ;
v- transposer les positions des utilisateurs dans la maquette numérique (BIM, CIM) et calculent le nœud dispatcheur ($N_D$) associé à chaque utilisateur et situé le plus près de l'utilisateur;
vi- calculer, pour chaque utilisateur, un sous-graphe associé (DODAG') qui correspond à un chemin personnalisé, à chaque utilisateur, vers un lieu cible donné ("E", "S", "W") via les bornes de positionnement, à partir du graphe orienté acyclique actualisé, et du nœud dispatcheur ($N_D$) associé à chaque utilisateur, le sous-graphe (DODAG') qui correspond au chemin personnalisé à chaque utilisateur vers un lieu cible donné ("E", "S", "W") via les bornes de positionnement, étant calculé à l'aide :

- d'une «fonction objectif individuelle» pour chaque nœud dispatcheur ($N_D$), basée sur le profil de l'utilisateur, construite pour :

• attribuer à chaque utilisateur, et actualiser tous ses nœuds de passage (N) associés au nœud dispatcheur ($N_D$), à proximité duquel se trouve chaque utilisateur,
• constituer et actualiser pour l'utilisateur des listes d'attente de chaque nœud de passage (N) associé au nœud dispatcheur ($N_D$),
• constituer et actualiser des listes d'attente de chaque nœud de passage (N) pour l'utilisateur dans l'ensemble du bâtiment,

- d'une «fonction objectif générale» construite à partir des «fonctions objectif individuelles» de tous les utilisateurs,
qui présente en entrée les listes d'attente des utilisateurs de chaque nœud de passage (N) pour l'ensemble du bâtiment, et en sortie les sous-graphes (DODAG') de tous les utilisateurs,
la «fonction objectif générale» délivrant, à chaque utilisateur, son sous-graphe (DODAG') calculé pour optimiser l'ensemble des « fonctions objectif individuelles », de tous les utilisateurs ;

vii- réitérer les étapes suivantes ii à vi, afin d'actualiser spatialement et temporellement le guidage, à une fréquence temporelle donnée et adaptée à l'évènement,

- des objets connectés (T) destinés à être portés par des utilisateurs ou des objets connectés (T') du bâtiment ou la borne de positionnement localisés dans le bâtiment, guident à chaque borne de positionnement chaque utilisateur, à suivre son sous-graphe (DODAG') associé, vers un lieu cible donné ("E", "S", "W").

**15.** Dispositif (D) selon la revendication précédente, dans lequel l'objet connecté (T) et le serveur de contrôle (S) sont configurés pour permettre, devant chaque borne de positionnement (B), la localisation et/ou le guidage de l'utilisateur, et les bornes de positionnement (B) sont configurées pour échanger des patterns numérisés ou imprimés avec l'objet connecté (T) de la personne.

**16.** Dispositif (D) selon l'une des revendications 14 à 15, dans lequel les bornes de positionnement (B) connectées et/ou non-connectées sont fixes et/ou mobiles.

FIG. 1

EP 4 063 789 A1

FIG. 2

EP 4 063 789 A1

FIG. 3

EP 4 063 789 A1

FIG.4

FIG. 5

FIG. 6a

FIG. 6b

FIG. 6c

FIG. 6d

FIG. 7

**FIG. 8**

FIG. 9

FIG. 10

FIG. 11

EP 4 063 789 A1

FIG. 12

FIG. 13

FIG. 14

EP 4 063 789 A1

FIG. 15

FIG. 16

FIG. 17a

FIG. 17b

EP 4 063 789 A1

FIG. 18a

FIG. 18b

FIG. 18c

FIG. 19

EP 4 063 789 A1

FIG. 20

FIG. 21

FIG. 22

FIG. 23

FIG. 24

FIG. 25

Etape=1

FIG. 26

Etape=13

FIG. 27

Etape=0

FIG. 28

Etape=1

FIG. 29

Etape=2

FIG. 30

FIG. 31

**Europäisches Patentamt**

**European Patent Office**

**Office européen des brevets**

# RAPPORT DE RECHERCHE EUROPEENNE

Numéro de la demande

EP 21 16 5406

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 736 027 A1 (ATS GROUP IP HOLDINGS LTD [VG]) 28 mai 2014 (2014-05-28)<br>* alinéas [0005], [0006], [0008], [0011], [0012], [0018], [0025], [0027], [0029], [0030], [0033], [0034], [0035], [0038], [0055]; figure 4 *<br>* alinéas [0014], [0015], [0017], [0032], [0037]; revendication 8; figure 6 *<br>----- | 1-16 | INV.<br>G01C21/20<br>G01C21/34<br>G08B7/06 |
| A | DE 10 2011 083023 A1 (BOSCH GMBH ROBERT [DE]) 21 mars 2013 (2013-03-21)<br>* abrégé *<br>* alinéas [0005] - [0012], [0019] - [0020], [0027] - [0028], [0035]; figures 2, 6a, 6b *<br>----- | 1-16 | |
| A | US 9 898 912 B1 (JORDAN II JACKIE O [US] ET AL) 20 février 2018 (2018-02-20)<br>* le document en entier *<br>----- | 1-16 | DOMAINES TECHNIQUES RECHERCHES (IPC)<br><br>G01C<br>G08B |

Le présent rapport a été établi pour toutes les revendications

| Lieu de la recherche | Date d'achèvement de la recherche | Examinateur |
|---|---|---|
| La Haye | 26 août 2021 | Rocca, Simone |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

               

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 16 5406

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-08-2021

| Document brevet cité au rapport de recherche | Date de publication | Membre(s) de la famille de brevet(s) | Date de publication |
|---|---|---|---|
| EP 2736027 A1 | 28-05-2014 | EP 2736027 A1<br>WO 2014080040 A2 | 28-05-2014<br>30-05-2014 |
| DE 102011083023 A1 | 21-03-2013 | DE 102011083023 A1<br>WO 2013041477 A1 | 21-03-2013<br>28-03-2013 |
| US 9898912 B1 | 20-02-2018 | US 9898912 B1<br>US 10249158 B1<br>US 10282788 B1<br>US 10282961 B1<br>US 10346811 B1<br>US 10353359 B1<br>US 10356303 B1<br>US 10388135 B1<br>US 10515372 B1<br>US 10522009 B1<br>US 10573146 B1<br>US 10573149 B1<br>US 10741033 B1<br>US 10795329 B1<br>US 10943447 B1<br>US 11004320 B1<br>US 11043098 B1<br>US 11049078 B1<br>US 2020302549 A1<br>US 2021142648 A1<br>US 2021158671 A1 | 20-02-2018<br>02-04-2019<br>07-05-2019<br>07-05-2019<br>09-07-2019<br>16-07-2019<br>16-07-2019<br>20-08-2019<br>24-12-2019<br>31-12-2019<br>25-02-2020<br>25-02-2020<br>11-08-2020<br>06-10-2020<br>09-03-2021<br>11-05-2021<br>22-06-2021<br>29-06-2021<br>24-09-2020<br>13-05-2021<br>27-05-2021 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **E. CETIN ; K. DIMITROPOULOS ; B. GOUVERNEUR ; N. GRAMMALIDIS ; O. GUNAY ; Y. H. HABIBOGLU ; B. U. TOREYIN ; S. VERSTOCKT.** Video fire détection: a review. *Digital Signal Processing,* 2013, vol. 23 (6), 1827-1843
- **S. COSAR ; G. DONATIELLO ; V. BOGORNY ; C. GARATE ; L. ALVARES ; F. BREMOND.** Towards Abnormal Trajectory and Event Détection in Video Surveillance. *IEEE Transactions on Circuits and Systems for Video Technology,* 2016
- **J. FONOLLOSA ; A. SOLÓRZANO ; S. MARCO.** Chemical Sensor Systems and Associated Algorithms for Fire Détection: A Review. *Sensors,* 2018, vol. 18
- **C. JORGENSEN ; S. POWELL.** Solving 0-1 Minimax Problems. *The Journal of the Operational Research Society,* Juin 1987, vol. 38 (6), 515-522
- **OMPRAKASH GNAWALI ; PHILIP LEVIS.** The ETX Objective Function for RPL. IETF, 2010
- The Minimum Rank with Hysteresis Objective Function. **OMPRAKASH GNAWALI ; PHILIP LEVIS.** RFC 6719. 2012
- **H. WANG ; A. KLASER ; C. SCHMID ; C.-L. LIU.** Action récognition by dense trajectories. *Computer Vision and Pattern Récognition (CVPR), 2011 IEEE Conférence on,* Juin 2011, 3169-3176